# EUROPEAN PATENT APPLICATION

(11) **EP 3 833 087 A1**
(43) Date of publication of application: **09.06.2021**
(21) Application number: 18928493.8
(22) Date of filing: 30.07.2018
(51) Int. Cl.: H04W 24/10, H04W 72/04

(54) **USER TERMINAL**

(71) Applicant: NTT DOCOMO, INC., Tokyo 100-6150 (JP)
(72) Inventor: TAKEDA, Kazuki, Tokyo 100-6150 (JP); YOSHIOKA, Shohei, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/028469
(87) International publication number: WO 2020/026305

(57) **Abstract**

To appropriately control communication even when at least one of an MCS table, a CQI table and an RNTI different from those of legacy LTE systems is introduced, a user terminal according to one aspect of the present disclosure includes: a transmission section that transmits Channel State Information (CSI) by using at least one of a first Channel Quality Indicator (CQI) table and a second CQI table in which a code rate lower than a minimum code rate specified in the first CQI table has been specified; and a control section that, when a CQI table is configured separately per cell, controls the transmission of the CSI by assuming that different CQI tables are not configured to a plurality of cells included in a given group or prioritizing one of first CSI based on the first CQI table and second CSI based on the second CQI table.

## Description

### Technical Field

The present disclosure relates to a user terminal of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (LTE Rel. 8 and 9), LTE-Advanced (LTE-A and LTE Rel. 10, 11, 12 and 13) has been specified.

LTE successor systems (also referred to as, for example, Future Radio Access (FRA), the 5th generation mobile communication system (5G), 5G+ (plus), New Radio (NR), New radio access (NX), Future generation radio access (FX) or LTE Rel. 14, 15 or subsequent releases) are also studied.

In legacy LTE systems (e.g., 3GPP Rel. 8 to 14), a user terminal (UE: User Equipment) controls reception of a physical downlink shared channel (e.g., PDSCH: Physical Downlink Shared Channel) based on Downlink Control Information (also referred to as, for example, DCI or a DL assignment) from a base station. Furthermore, the UE controls transmission of a physical uplink shared channel (e.g., PUSCH: Physical Uplink Shared Channel) based on DCI (also referred to as, for example, a UL grant). The UE controls reception of a PDSCH (or transmission of a PUSCH) by using a given Modulation and Coding Scheme (MCS) table.

Furthermore, the UE transmits Channel State Information (CSI) by using a given Channel Quality Indicator (CQI) table.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

Future radio communication systems (e.g., 5th generation mobile communication system (5G) and New Radio (NR)) assume use cases such as higher sophistication of a mobile broadband (eMBB: enhanced Mobile Broadband), machine type communications (mMTC: massive Machine Type Communications) that realize multiple simultaneous connection, and Ultra-Reliable and Low-Latency Communications (URLLC). For example, URLLC is requested to realize higher latency reduction than that of eMBB, and more ultra reliability than that of eMBB.

It is assumed for NR to introduce new MCS tables and CQI tables that are not specified in legacy LTE systems to support various use cases. The new tables may have contents that specify candidates (indices) of low code rates compared to legacy tables.

Furthermore, to introduce the new MCS table, it is also thought to use a new RNTI (that may be referred to as an MCS RNTI) to indicate the new MCS table.

On the other hand, when at least one of the new MCS tables and CQI tables or the new RNTI is introduced, how to control a communication operation that uses the new table or the new RNTI is not sufficiently studied. When the communication operation that uses the new table or the new RNTI is not appropriately performed, there is a risk that communication quality deteriorates.

The present disclosure has been made in light of this point, and one of objects of the present disclosure is to provide a user terminal that can appropriately control communication even when at least one of an MCS table, a CQI table and an RNTI different from those of legacy LTE systems is introduced.

### Solution to Problem

A user terminal according to one aspect of the present disclosure includes: a transmission section that transmits Channel State Information (CSI) by using at least one of a first Channel Quality Indicator (CQI) table and a second CQI table in which a code rate lower than a minimum code rate specified in the first CQI table has been specified; and a control section that, when a CQI table is configured separately per cell, controls the transmission of the CSI by assuming that different CQI tables are not configured to a plurality of cells included in a given group or prioritizing one of first CSI based on the first CQI table and second CSI based on the second CQI table.

### Advantageous Effects of Invention

According to one aspect of the present disclosure, it is possible to appropriately control communication even when at least one of an MCS table, a CQI table and an RNTI different from those of legacy LTE systems is introduced.

### Brief Description of Drawings

Figs. 1A and 1B are diagrams illustrating one example of MCS tables 1 and 2.
Fig. 2 is a diagram illustrating one example of an MCS table 3.
Figs. 3A and 3B are diagrams illustrating one example of CQI tables 1 and 2.
Fig. 4 is a diagram illustrating one example of a CQI table 3.
Fig. 5 is a diagram illustrating one example of CSI transmission according to the present embodiment.
Fig. 6 is a diagram illustrating another example of CSI transmission according to the present embodiment.
Fig. 7 is a diagram illustrating another example of CSI transmission according to the present embodiment.
Figs. 8A and 8B are diagrams illustrating one example of HARQ-ACK transmission according to the present embodiment.
Figs. 9A and 9B are diagrams illustrating one example of a configuration of a max code rate according to the present embodiment.
Fig. 10 is a diagram illustrating one example of transmission/reception control in a case where UL transmission and DL reception duplicate according to the present embodiment.
Fig. 11 is a diagram illustrating one example of UL transmission power control according to the present embodiment.
Figs. 12A and 12B are diagrams illustrating control of multiplexing of UCI on a PUSCH according to the present embodiment.
Fig. 13 is a diagram illustrating one example of a schematic configuration of a radio communication system according to one embodiment.
Fig. 14 is a diagram illustrating one example of an overall configuration of the base station according to the one embodiment.
Fig. 15 is a diagram illustrating one example of a function configuration of the base station according to the one embodiment.
Fig. 16 is a diagram illustrating one example of an overall configuration of a user terminal according to the one embodiment.
Fig. 17 is a diagram illustrating one example of a function configuration of the user terminal according to the one embodiment.
Fig. 18 is a diagram illustrating one example of hardware configurations of the base station and the user terminal according to the one embodiment.

### Description of Embodiments

### <MCS Table>

It is studied for NR to control at least one of a modulation scheme (or a modulation order) and a code rate (modulation order/code rate) of a physical shared channel scheduled by DCI based on a given field included in DCI. For example, a UE controls reception processing of a PDSCH based on a Modulation and Coding Scheme (MCS) field included the DCI (e.g., DCI format 1_0 or 1_1) for scheduling a PDSCH.

More specifically, the UE receives the PDSCH based on a table (also referred to as an MCS table) defined by associating MCS indices, modulation orders and code rates, and an MCS index indicated by the DCI. Similarly, the UE transmits a PUSCH based on an MCS table and an MCS index indicated by the DCI for scheduling the PUSCH.

Each modulation order is a value associated with each modulation scheme. For example, a modulation order of Quadrature Phase Shift Keying (QPSK) corresponds to 2, a modulation order of 16 Quadrature Amplitude Modulation (QAM) corresponds to 4, a modulation order of 64 QAM corresponds to 6, and the modulation order of 256 QAM corresponds to 8.

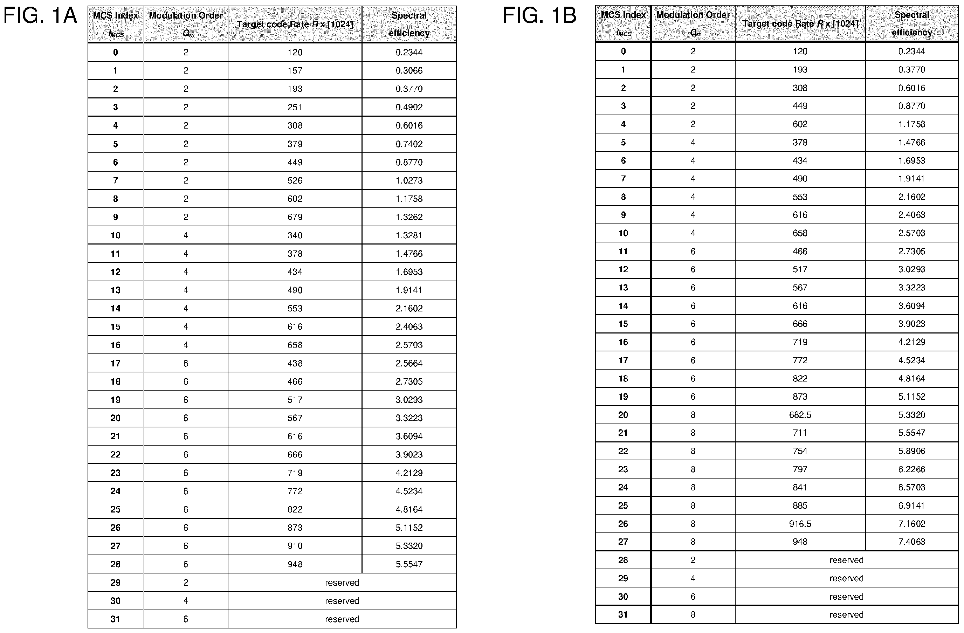

Fig. 1 is a diagram illustrating one example of an MCS table. In addition, values of the MCS table illustrated in Fig. 1 are only exemplary, and are not limited to these. Furthermore, part of items (e.g., spectral efficiency) associated with an MCS index (I_{MCS}) may be omitted, or other items may be added.

In Fig. 1A, QPSK, 16 QAM and 64 QAM are specified as modulation orders, and, in Fig. 1B, QPSK, 16 QAM, 64 QAM and 256 QAM are specified as modulation orders. Furthermore, in Figs. 1A and 1B, a minimum code rate (MCS index 0) is defined as 120 (× 1024).

The MCS table in Fig. 1A may be referred to as an MCS table 1 for a PDSCH, a 64 QAM table or qam 64. The MCS table in Fig. 1B may be referred to as an MCS table 2 for a PDSCH, a 256 QAM table or qam 256. In addition, the 64 QAM table and the 256 QAM table illustrated in Fig. 1 are specified in legacy LTE systems, too.

A case (e.g., URLLC) is also assumed for NR where lower latency and more ultra reliability than those of the legacy LTE systems are requested. To support this case, it is assumed to introduce a new MCS table different from the MCS tables specified in the legacy LTE systems.

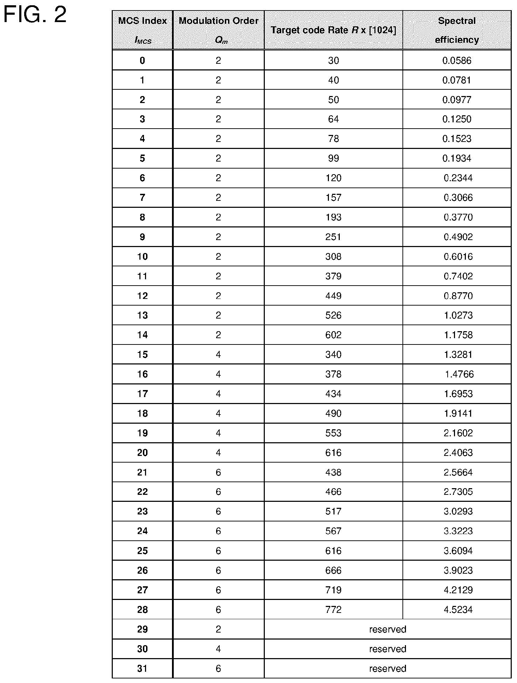

Fig. 2 illustrates one example of a new MCS table. In addition, values of the MCS table illustrated in Fig. 2 are only exemplary, and are not limited to these. In Fig. 2, QPSK, 16 QAM and 64 QAM are specified as modulation orders, and a minimum code rate (MCS index 0) is defined as 30 (× 1024). The MCS table in Fig. 2 may be referred to as an MCS table 3 for the PDSCH, a new MCS table or qam 64 LowSE.

Thus, the MCS table (MCS table 3) may be a table in which a code rate (e.g., 30) lower than minimum code rates (e.g., 120) specified in the MCS tables (the MCS table 1 and the MCS table 2) illustrated in Fig. 1 has been specified. Alternatively, the MCS table 3 may be a table in which a low code rate at an identical MCS index is configured compared to the MCS table 1 or the MCS table 2.

The UE may select the MCS table used to determine a modulation order/code rate of a PDSCH based on at least one of following conditions (1) to (3).
(1) Whether or not a new RNTI is configured
(2) Notification of information (MCS table information) that indicates the MCS table
(3) An RNTI type to be applied to CRC scrambling of at least one of DCI (or a PDCCH) and the PDSCH

For example, a case is assumed where a new RNTI (that may be referred to as an MCS RNTI) is not configured to the UE by a higher layer (e.g., RRC signaling). In this case, the UE may determine the MCS table to be applied based on MCS table information indicated by a higher layer parameter (e.g., mcs-table).

The MCS table information may be information that indicates one of the MCS table 1, the MCS table 2 (e.g., qam 256) and the MCS table 3 (e.g., qam 64 LowSE). Alternatively, the MCS table information may be information that indicates one of the MCS table 2 (e.g., qam 256) and the MCS table 3 (e.g., qam 64 LowSE).

When the MCS table 2 is configured, the UE controls reception of the PDSCH by applying the MCS table 2.

When the new MCS table (MCS table 3) is configured, the UE may determine an MCS table to be applied based on a search space type used for transmission of DCI. When, for example, the new MCS table is configured, and when the DCI (e.g., DCI format 0_0 or 1_0) is transmitted in a common search space, the UE uses the MCS table 1. On the other hand, when the new MCS table is configured, and DCI (e.g., DCI format 0_0, 1_0, 0_1 or 1_0) is transmitted in a UE-specific search space, the UE uses the MCS table 3. In addition, respectively different MCS tables may be configured to UL (PUSCH transmission) and DL (PDSCH reception).

Next, a case is assumed where a new RNTI is configured to the UE by a higher layer (e.g., RRC signaling). In this case, the UE may determine an MCS table based on an RNTI type to be applied to CRC scrambling of at least one of DCI (or a PDCCH) and a PDSCH. When, for example, a CRC of the PDSCH is scrambled by the new RNTI, the UE receives the PDSCH by using the new MCS table (MCS table 3).

Furthermore, whether or not to configure a new MCS table by a higher layer parameter (e.g., mcs-Table) to a PDSCH to be transmitted by semi-persistent scheduling (DL-SPS) may be notified. The new MCS table for DL-SPS may be configured independently from PDSCH transmission (grant-based DL scheduling) based on the DCI.

In addition, conditions for using the table illustrated in Figs. 1 and 2 are not limited to the above conditions.

### <CQI Table>

The legacy LTE systems support a CSI reporting for feeding back a result obtained by the UE by performing measurement based on a channel state measurement reference signal as Channel State Information (CSI) to the base station at a given timing.

The channel state measurement reference signal is also referred to as, for example, a Channel State Information-Reference Signal (CSI-RS), yet is not limited to this. The CSI may include at least one of a Channel Quality Indicator (CQI), a Precoding Matrix Indictor (PMI) and a Rank Indicator (RI). Furthermore, the CSI may include at least one of first CSI (CSI part 1) and second CSI (CSI part 2).

The CSI reporting supports a Periodic CSI reporting (P-CSI reporting), a CSI reporting (SP-CSI reporting) that uses a semi-persistently indicated resource, and an Aperiodic CSI reporting (A-CSI reporting).

When performing the CSI reporting, the UE transmits a CQI index selected from a CQI table. The CQI table may be a table (also referred to as the CQI table) defined by associating CQI indices, modulation orders and code rates.

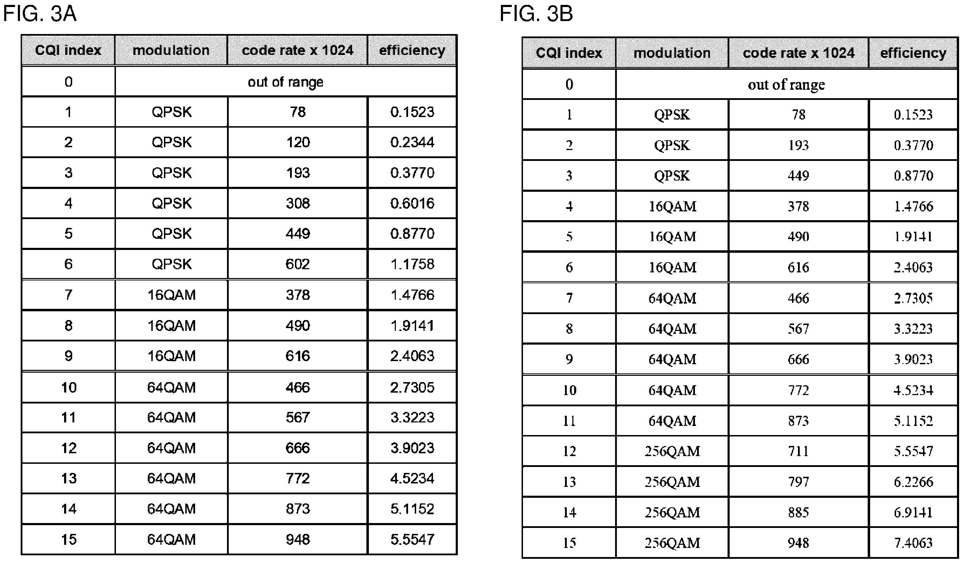

Fig. 3 is a diagram illustrating one example of the CQI table. In addition, values in the CQI table illustrated in Fig. 3 are only exemplary, and are not limited to these. Furthermore, part of items (e.g., spectral efficiency) associated with the CQI index may be omitted, or other items may be added.

In Fig. 3A, QPSK, 16 QAM and 64 QAM are specified as modulation orders, and, in Fig. 3B, QPSK, 16 QAM, 64 QAM and 256 QAM are specified as modulation orders. Furthermore, in Figs. 3A and 3B, a minimum code rate (CQI index 1) is defined as 78 (× 1024).

The CQI table in Fig. 3A may be referred to as a CQI table 1 or a CQI table for 64 QAM. The CQI table in Fig. 3B may be referred to as a CQI table 2 or a CQI table for 256 QAM. I addition, the CQI table 1 and the CQI table 2 illustrated in Fig. 3 are specified in the legacy LTE systems, too.

A case (e.g., URLLC) is also assumed for NR where lower latency and more ultra reliability than those of the legacy LTE systems are requested. To support this case, it is assumed to introduce a new CQI table different from the CQI tables specified in the legacy LTE systems.

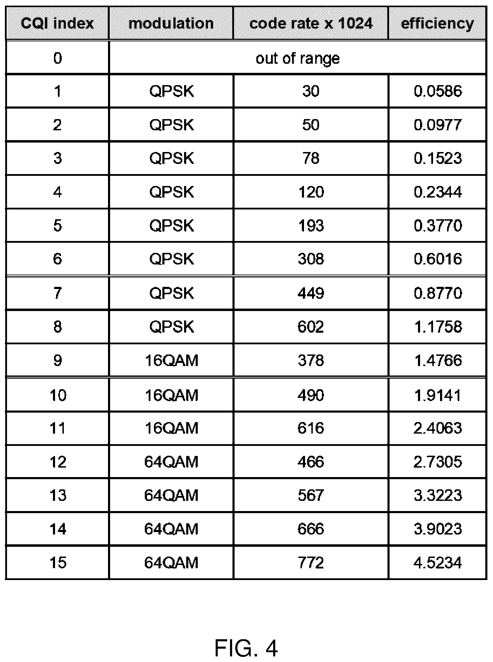

Fig. 4 illustrates one example of the new CQI table. In addition, values of the CQI table illustrated in Fig. 4 are only exemplary, and are not limited to these. In Fig. 4, QPSK, 16 QAM and 64 QAM are specified as modulation orders, and a minimum code rate (CQI index 1) is defined as 30 (× 1024). The CQI table in Fig. 4 may be referred to as a CQI table 3 or a new CQI table.

Thus, the new CQI table (CQI table 3) may be a table in which a code rate (e.g., 30) lower than the minimum code rates (e.g., 78) specified in the CQI tables (the CQI table 1 and the CQI table 2) illustrated in Fig. 3 has been specified. Alternatively, the CQI table 3 may be a table in which a low code rate at an identical CQI index is configured compared to the CQI table 1 or the CQI table 2.

The UE may select a CQI table used for transmission of CSI based on information (CQI table information) related to the CQI table notified from a network (e.g., base station). For example, the UE applies the CQI table configured by a higher layer (e.g., cqi-table) from the base station, and transmits the CSI.

Thus, in a case where at least one of a new MCS table, a new CQI table and a new RNTI is introduced, how to control a communication operation that uses the new table or the new RNTI matters.

For example, how the UE controls a CSI reporting by using the new CQI table matters (task 1). Alternatively, when data (e.g., PDSCH) that uses the new MCS table is scheduled, how the UE controls feedback of a transmission acknowledgement signal (also referred to as HARQ-ACK, ACK/NACK or A/N) for the data matters (task 2).

Alternatively, how to use the new RNTI matters (task 3). Alternatively, how the UE controls UL power control in a case where the new RNTI is introduced matters (task 4). Alternatively, how the UE controls a priority of decoding or transmission of data (e.g., physical shared channel) in the case where the new RNTI is introduced matters (task 5).

Hence, the inventors of the present invention have studied a communication operation in the case where at least one of the new MCS table, the new CQI table and the new RNTI is introduced, and reached the present invention.

In addition, the new RNTI may be referred to as an MCS-RNTI, a URLLC-RNTI, a U-RNTI, a Y-RNTI or an X-RNTI in the following description. That is, the new RNTI may be read as at least one of the MCS-RNTI, the URLLC-RNTI, the U-RNTI, the Y-RNTI and the X-RNTI in the following description.

An embodiment according to the present disclosure will be described in detail below with reference to the drawings. Aspects according to the present embodiment may be each applied alone or may be applied in combination. In addition, the embodiment described below only needs to solve at least one of the above tasks 1 to 5, and is not limited to embodiments that concurrently resolve all of the tasks 1 to 5.

### (First Aspect)

According to the first aspect, when communication is performed by using 1 or more cells, a CSI reporting is controlled based on a given condition (or a given rule). In addition, a cell may be read as a Component Carrier (CC) in the following description. In addition, the following description cites an example of a case where CSI is transmitted on a PUCCH. However, a case where the CSI is multiplexed on a PUSCH may be also applied likewise.

When performing the CSI reporting, the UE applies a CQI table configured from a network (e.g., base station) by a higher layer signaling. On the other hand, the higher layer parameter (e.g., cqi-Table) that indicates the CQI table is included in a higher layer parameter (e.g., CSI-ReportConfig) that indicates a CSI report configuration. Furthermore, a CSI report configuration list is included in a higher layer parameter (e.g., CSI-MeasConfig) that indicates a CSI measurement configuration, and the CSI measurement configuration is included in a higher layer parameter (e.g., ServingCellConfig) that indicates a serving cell configuration.

That is, the CQI table is each configured at least per cell (or at least per cell and per CSI report configuration). In this case, when communication (e.g., Carrier Aggregation (CA) or Dual Connectivity (DC)) that uses a plurality of cells is performed, a case is also likely to occur where a different CQI table is configured at least per cell (or at least per cell and per CSI report configuration).

For example, it is also thought that different CQI tables are configured to a plurality of cells included in a given cell group. In addition, the given cell group may be a cell group that uses an uplink control channel (e.g., PUCCH) of an identical cell for transmission of Uplink Control Information (e.g., UCI). The given cell group may be referred to as a PUCCH group. A cell to which a PUCCH is configured may be referred to as a primary cell, a PSCell or a PUCCH SCell.

When timings of CSI reportings (or transmission timings of pieces of CSI) associated with respective cells duplicate, how to control the CSI reportings matters. When, for example, the CSI transmission timings of the respective cells included in the given cell group duplicate, and when a transmission condition (e.g., code rate) is not satisfied, it is difficult to transmit pieces of CSI associated with all cells.

Hence, according to the first aspect, when transmission timings of pieces of CSI associated with cells duplicate, at least one of following CSI transmission control #1 to #3 is applied to transmit the CSI.

### <CSI Transmission Control #1>

Control is performed such that a first CQI table and a second CQI table are not concurrently configured to a given cell group. The first CQI table is at least one of, for example, a CQI table 1 illustrated in Fig. 3A and a CQI table 2 illustrated in Fig. 3B, and the second CQI table may be, for example, a CQI table 3 illustrated in Fig. 4. That is, control is performed not to configure the CQI table 3, and the CQI table 1 or the CQI table 2 in a mixed manner to cells included in the given cell group.

When configuring a CSI reporting that uses the CQI table 3 to a given cell included in the given cell group, the base station performs control not to configure a CSI reporting that uses the CQI table 1 or the CQI table 2 to other cells (i.e., control to perform the CSI reporting that uses the CQI table 3). The UE may control transmission of CSI assuming that the CQI table 3 and the CQI table 1 or the CQI table 2 are not concurrently configured to different cells included in the given cell group.

Consequently, it is possible to prevent a transmission timing of the CSI reporting that uses the CQI table 3 and a transmission timing of a CSI reporting that uses the CQI table 1 or the CQI table 2 from duplicating in the given cell group.

### <CSI Transmission Control #2>

When CSI transmission timings of a plurality of cells included in a given cell group duplicate, a CSI reporting is controlled based on a CQI table type to be applied.

For example, it is assumed that a first cell included in the given cell group performs a CSI reporting that uses the first CQI table, and a second cell included in the given cell group performs a CSI reporting that uses the second CQI table. That is, a higher layer signaling notified from the base station configures the first CQI table (the CQI table 1 or the CQI table 2) to the CSI reporting of the first cell, and configures the second CQI table (CQI table 3) to the CSI reporting of the second cell to the UE.

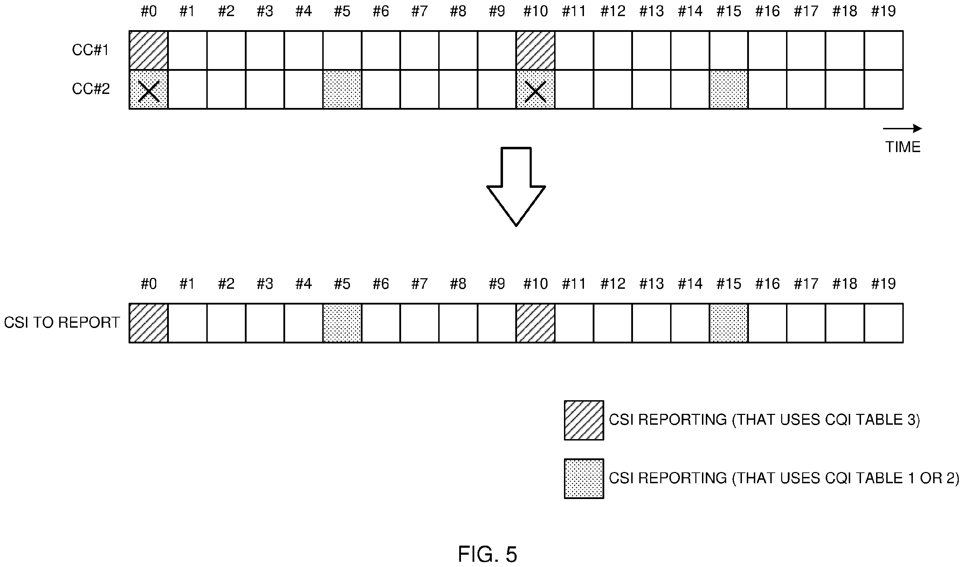

When a transmission timing of CSI that uses the first CQI table and a transmission timing of CSI that uses the second CQI table duplicate, for example, the UE performs control not to transmit (e.g., control to drop) the CSI that uses the first CQI table (see Fig. 5). Fig. 5 illustrates a case where a reporting periodicity of the first CSI that uses the first CQI table is 5 slots, and a reporting periodicity of the second CSI that uses the second CQI table is 10 slots.

In this case, the transmission timings of the pieces of the first CSI and the transmission timings of the pieces of the second CSI duplicate in a slot #0 and a slot #10, and therefore control is performed to drop the first CSI, and transmit the second CSI. By prioritizing transmission of the second CSI, it is possible to suppress deterioration of quality of communication (e.g., URLLC) that needs low latency and ultra reliability.

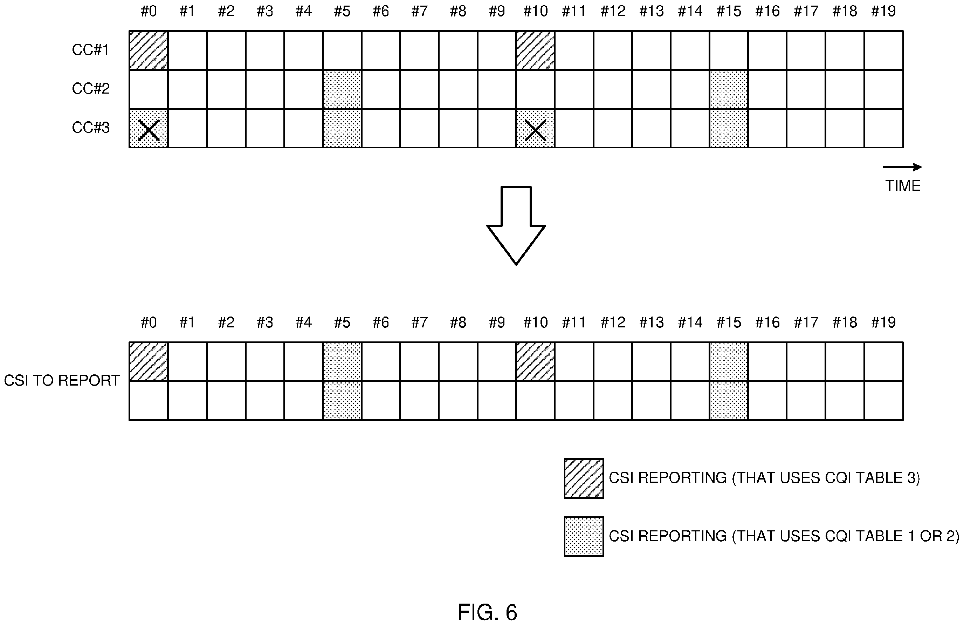

Furthermore, even when an uplink control channel (e.g., PUCCH) used for CSI transmission supports transmission of a plurality of (e.g., two) pieces of CSI, the UE may perform control to transmit only one of the first CSI and the second CSI (see Fig. 6). Fig. 6 illustrates a case where the first cell and the second cell included in the given cell group perform CSI reportings that use the first CQI table, and a third cell included in the given cell group performs a CSI reporting that uses the second CQI table.

In Fig. 6, transmission timings of the pieces of the first CSI duplicate in a slot #5 and a slot #15, and therefore the first CSI of each cell is multiplexed on a PUCCH of a given cell and is transmitted. On the other hand, the transmission timings of the pieces of the first CSI and the transmission timings of the pieces of the second CSI duplicate in the slot #0 and the slot #10, and therefore control is performed to drop the first CSI, and transmit the second CSI.

Thus, control is performed not to perform concurrent transmission of CSI that uses the first CQI table (e.g., CQI table 1 or 2) and CSI that uses the second CQI table (e.g., CQI table 3) to enhance CQI report granularity in a low code rate domain in particular, and second CQI that is suitable to communication that is requested to achieve ultra reliability is multiplexed with first CQI, so that it is possible avoid an increase in a payload and deterioration of reliability.

### <CSI Transmission Control #3>

When transmission timings of pieces of CSI of a plurality of cells included in a given cell group duplicate, a plurality of pieces of CSI are multiplexed and transmitted until a given condition is satisfied, and a CSI reporting is controlled based on a CQI table type to be applied when the given condition is not satisfied.

For example, it is assumed that the first cell included in the given cell group performs a first CSI reporting that uses the first CQI table, and the second cell included in the given cell group performs a second CSI reporting that uses the second CQI table. When the transmission timing of the first CSI and the transmission timing of the second CSI duplicate, the UE multiplexes and transmits the first CSI and the second CSI within a range of the given condition (in which, for example, a code rate is a given value or less). For example, the UE multiplexes the first CSI and the second CSI on a PUCCH or a PUSCH of the given cell.

On the other hand, outside the range of the given condition, control is performed not to transmit (for example, to drop) the first CSI and to transmit the second CSI.

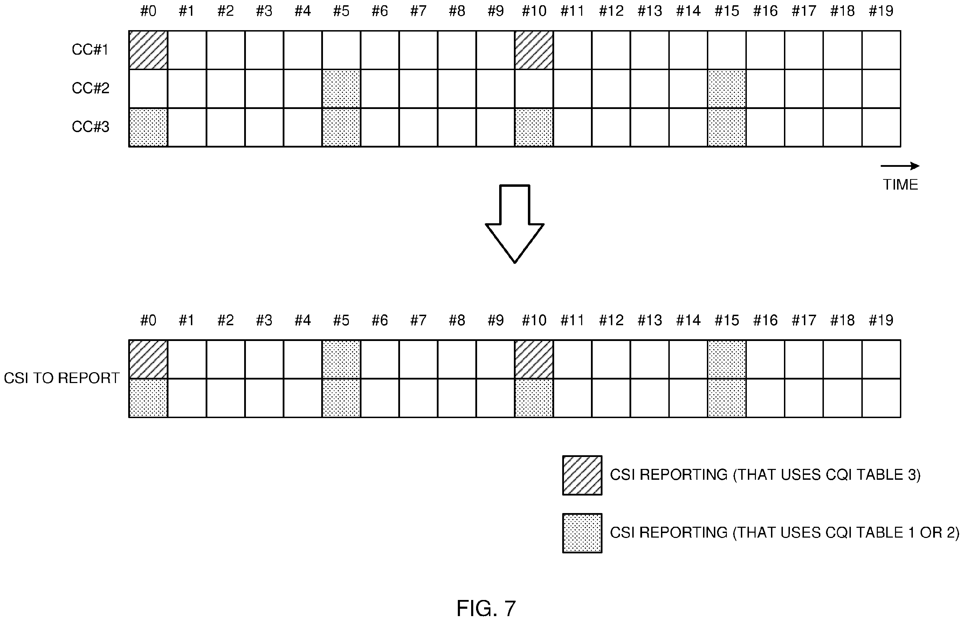

Fig. 7 illustrates a case where the first cell and the second cell included in the given cell group perform CSI reportings that use the first CQI table, and the third cell included in the given cell group performs a CSI reporting that uses the second CQI table.

In Fig. 7, the transmission timings of the pieces of the first CSI duplicate in the slot #5 and the slot #15, and therefore the first CSI of each cell is multiplexed on a PUCCH of the given cell and transmitted. Similarly, the transmission timings of the pieces of the first CSI and the transmission timings of the pieces of the second CSI duplicate in the slot #0 and the slot #10, and therefore the first CSI and the second CSI are multiplexed on the PUCCH of the given cell and transmitted when the given condition is satisfied.

Thus, by performing control to transmit a plurality of pieces of CSI as much as possible within the range of the given condition, it is possible to suppress deterioration of communication quality of each cell. Furthermore, by prioritizing transmission of the second CSI outside the range of the given condition, it is possible to suppress deterioration of quality of communication (e.g., URLLC) that needs at least low latency and ultra reliability.

### <Priority of CSI Transmission>

When given CSI is dropped in a case of CSI transmission control #2 and #3, CSI to be dropped (or CSI to be transmitted) may be determined according to a following procedure.

Step 1: A type of the CSI to be transmitted is determined based on a following priority order
A-CSI that uses a PUSCH > SP-CSI that uses the PUSCH > SP-CSI that uses a PUCCH > P-CSI that uses the PUCCH

Step 2: When there are a plurality of pieces of CSI whose priority is the same in step 1, the CSI is determined based on the following priority order
CSI that is used to transmit L1-RSRP > CSI that is not used to transmit L1-RSRP

Step 3: When there are a plurality of pieces of CSI whose priority is the same in step 2, the CSI is determined based on the following priority order
CSI of a low serving cell index > CSI of a high serving cell index

Step 4: When there are a plurality of pieces of CSI whose priority is the same in step 3, the CSI is determined based on the following priority order
CSI of a low reporting configuration ID (reportConfigID) > CSI of a high reporting configuration ID (reportConfigID)

In addition, when the priority to transmit CSI is determined based on the CQI table type, the CSI is determined based on the following priority order
CSI that uses the CQI table 3 > CSI that uses the CQI table 1 or 2

Application of the priority order based on the CQI table type may be configured at least one of before step 1 (step 0), between steps 1 and 2 (step 1.5), between steps 2 and 3 (step 2.5), between steps 3 and 4 (step 3.5) and after step 4 (step 5).

Thus, by taking the CQI table to be applied into account to determine dropping of CSI (or transmission of the CSI), it is possible to suppress deterioration of quality of communication (e.g., URLLC) that needs low latency and ultra reliability.

### (Second Aspect)

According to the second aspect, when communication is performed by using 1 or more cells, transmission of a transmission acknowledgement signal (HARQ-ACK) is controlled based on a given condition (or a given rule). In addition, a cell may be read as a Component Carrier (CC) in the following description. In addition, the following description will cite an example of a case where HARQ-ACK is transmitted on a PUCCH. However, a case where the HARQ-ACK is multiplexed on a PUSCH may be also applied likewise.

When performing reception of the PDSCH or (grant-based or configured grant-based) transmission of the PUSCH, a UE applies an MCS table indicated by a network (e.g., base station) by using at least one of a higher layer signaling and DCI.

A higher layer parameter (e.g., mcs-Table) that indicates the MCS table is included in a higher layer parameter (e.g., PDSCH-Config) that indicates a PDSCH configuration, or a higher layer parameter (e.g., PUSCH-Config or ConfiguredGrantConfig) that indicates a PUSCH configuration. The PDSCH configuration (or the PUSCH configuration) is included in a higher layer parameter that indicates a BWP. Furthermore, the BWP is configured per serving cell.

That is, the MCS table is each configured at least per cell (or at least per BWP). In this case, when communication (e.g., CA or DC) that uses a plurality of cells is performed, a case is also likely to occur where a different MCS table is configured per cell (or per BWP in each cell).

For example, it is thought that different MCS tables are configured to a plurality of cells included in a given cell group. In addition, the given cell group may be a cell group that uses an uplink control channel (e.g., PUCCH) of an identical cell for transmission of Uplink Control Information (e.g., UCI). The given cell group may be referred to as a PUCCH group. A cell to which the PUCCH is configured may be referred to as a primary cell, a PSCell or a PUCCH SCell.

When feedback timings of HARQ-ACKs (or transmission timings of the HARQ-ACKs) for the PDSCHs transmitted by respective cells duplicate, how to control transmission of the HARQ-ACKs matters. When, for example, the transmission timings of the HARQ-ACKs for the PDSCHs of the respective cells (or respective BWPs) included in the given cell group (or the given cell) duplicate, and when a transmission condition (e.g., code rate) is not satisfied, it is difficult to transmit the HARQ-ACKs associated with all PDSCHs.

Hence, according to the second aspect, when the transmission timings of the HARQ-ACKs for the PDSCHs transmitted by the respective cell (or the respective BWP) duplicate, at least one of following HARQ-ACK transmission control #1 to #3 is applied to transmit the HARQ-ACKs. In addition, a cell may be read as a BWP in the cell, and a given group may be read as the given cell in the following description.

### <HARQ-ACK Transmission Control #1>

Control is performed not to concurrently configure (indicate) a first MCS table and a second MCS table to the given cell group. The first MCS table is, for example, at least one of an MCS table 1 illustrated in Fig. 1A and an MCS table 2 illustrated in Fig. 1B, and the second MCS table is, for example, an MCS table 3 illustrated in Fig. 2. That is, control is performed not to configure the MCS table 3, and the MCS table 1 or the MCS table 2 in a mixed manner to cells included in the given cell group.

When configuring reception of a PDSCH (or transmission of a PUSCH) that uses the MCS table 3 to the given cell included in the given cell group, the base station performs control not to configure reception of the PDSCH that uses the MCS table 1 or the MCS table 2 to other cells (i.e., control to perform reception of the PDSCH that uses the MCS table 3). The UE may control reception of the PDSCH and transmission of HARQ-ACK for the PDSCH assuming that the MCS table 3 and the MCS table 1 or the MCS table 2 are not concurrently configured to the different cells in the given cell group.

Consequently, it is possible to prevent a transmission timing of HARQ-ACK for the PDSCH received by using the MCS table 3, and a transmission timing of HARQ-ACK for the PDSCH received by using the MCS table 1 or the MCS table 2 from duplicating in the given cell group.

### <HARQ-ACK Transmission Control #2>

When transmission timings of HARQ-ACKs for PDSCHs of a plurality of cells included in a given cell group duplicate, transmission of the HARQ-ACKs is controlled based on an MCS table type to be applied.

For example, a case is assumed where the first cell included in the given cell group transmits HARQ-ACK for a PDSCH received by using the first MCS table, and the second cell included in the given cell group transmits HARQ-ACK for a PDSCH received by using the second MCS table. That is, at least one of a higher layer signaling and DCI notified by the base station configures the first MCS table (the MCS table 1 or the MCS table 2) to scheduling of a PDSCH of the first cell, and configures the second MCS table (MCS table 3) to scheduling of a PDSCH of the second cell to the UE.

When a transmission timing of first HARQ-ACK for the PDSCH received by using the first MCS table, and a transmission timing of second HARQ-ACK for a PDSCH received by using the second MCS table duplicate, the UE performs control not to transmit (e.g., control to drop) the first HARQ-ACK. For example, Fig. 5 assumes a case where the CSI reporting is read as HARQ-ACK feedback, and a CQI table is read as an MCS table.

In this case, the first HARQ-ACKs for the PDSCHs received by using the first MCS table are transmitted in slots #0 and #10, and the second HARQ-ACKs for the PDSCHs received by using the second MCS table are transmitted in slots #0, #5, #10 and #15.

The transmission timings of the first HARQ-ACKs and the transmission timings of the second HARQ-ACKs duplicate in the slots #0 and #10, and therefore control is performed to drop the first HARQ-ACK, and transmit the second HARQ-ACK. By prioritizing transmission of the second HARQ-ACK, it is possible to suppress deterioration of quality of communication (e.g., URLLC) that needs low latency and ultra reliability.

Furthermore, even when uplink control channels (e.g., PUCCHs) used for transmission of HARQ-ACKs support transmission of a plurality of (e.g., two) HARQ-ACKs, the UE may perform control to transmit only one of the first HARQ-ACK and the second HARQ-ACK. For example, a case is assumed where the CSI reporting is read as HARQ-ACK feedback and the CQI table is read as the MCS table in Fig. 6.

This case is a case where the first cell and the second cell included in the given cell group perform HARQ-ACK transmission that uses the first MCS table, and the third cell included in the given cell group performs HARQ-ACK transmission that uses the second MCS table.

Transmission timings of the first HARQ-ACKs duplicate in the slot #5 and the slot #15, and therefore the first HARQ-ACK of each cell (a CC #1 and a CC #2 in this case) is multiplexed on a PUCCH of a given cell and transmitted. On the other hand, the transmission timings of the first HARQ-ACKs and the transmission timings of the second HARQ-ACKs duplicate in the slot #0 and the slot #10, and therefore control is performed to drop the first HARQ-ACKs, and transmit the second HARQ-ACKs.

### <HARQ-ACK Transmission Control #3>

When transmission timings of HARQ-ACKs for PDSCHs of a plurality of cells included in a given cell group duplicate, a plurality of HARQ-ACKs are multiplexed until a given condition is satisfied, and transmission of the HARQ-ACKs is controlled based on an MCS table type to be applied when the given condition is not satisfied.

For example, a case is assumed where the first cell included in the given cell group transmits HARQ-ACK for a PDSCH received by using the first MCS table, and the second cell included in the given cell group transmits HARQ-ACK for a PDSCH received by using the second MCS table.

When the transmission timing of the first HARQ-ACK for the PDSCH received by using the first MCS table and the transmission timing of the second HARQ-ACK for the PDSCH received by using the second MCS table duplicate, the UE multiplexes and transmits the first HARQ-ACK and the second HARQ-ACK within a range of the given condition (in which, for example, a code rate is a given value or less). For example, the UE multiplexes the first HARQ-ACK and the second HARQ-ACK on a PUCCH or a PUSCH of the given cell.

On the other hand, outside the range of the given condition, control is performed not to transmit (for example, to drop) the first HARQ-ACK and to transmit the second HARQ-ACK. For example, Fig. 7 assumes a case where a CSI reporting is read as HARQ-ACK feedback, and a CQI table is read as an MCS table.

In this case, the transmission timings of the first HARQ-ACKs duplicate in the slot #5 and the slot #15, and therefore the first HARQ-ACK of each cell is multiplexed on a PUCCH of the given cell and transmitted. Similarly, the transmission timings of the first HARQ-ACKs and the transmission timings of the second HARQ-ACKs duplicate in the slot #0 and the slot #10, and therefore the first HARQ-ACK and the second HARQ-ACK are multiplexed on the PUCCH of the given cell and transmitted when the given condition is satisfied.

Thus, by performing controlling to transmit a plurality of HARQ-ACKs as much as possible within the range of the given condition, it is possible to suppress deterioration of communication quality of each cell. Furthermore, by prioritizing transmission of the second HARQ-ACK outside the range of the given condition, it is possible to suppress deterioration of quality of communication (e.g., URLLC) that needs at least low latency and ultra reliability.

### <Control of Multiplexing of HARQ-ACK>

When the first HARQ-ACK and the second HARQ-ACK are multiplexed and transmitted in a case of HARQ-ACK transmission control #3, an order (A/N bit order) to multiplex HARQ-ACK bits of an HARQ-ACK codebook may be controlled based on a following option 1 or option 2.

### [Option 1]

According to the option 1, the A/N bit order of the HARQ-ACK codebook is controlled irrespectively of a type of an MCS table (without taking the type of the MCS table into account) used for reception of a PDSCH. An order of HARQ-ACK bits for the PDSCH of each cell is determined based on at least one of, for example, a cell index, a PDSCH occasion or an HARQ-ACK transmission timing and a DL assignment identifier (counter DAI).

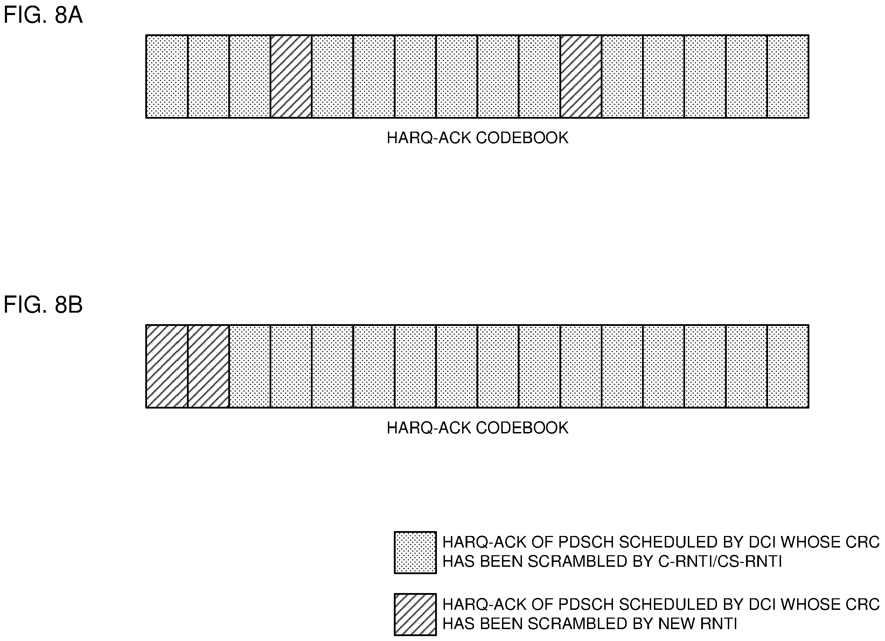

Fig. 8A is a diagram illustrating one example of a case where the A/N bit order of the HARQ-ACK codebook is controlled irrespectively of the MCS table type. In this case, an arrangement order of the first HARQ-ACK for a PDSCH received by using the first MCS table, and the second HARQ-ACK for a PDSCH received by using the second MCS table can be a distributed arrangement.

In addition, the PDSCH received by using the first MCS table may be a PDSCH scheduled by DCI whose CRC has been scrambled by a Cell RNTI (C-RNTI) or a Configured Scheduling RNTI (CS-RNTI). Furthermore, the PDSCH received by using the second MCS table may be a PDSCH scheduled by DCI whose CRC has been scrambled by a new RNTI.

The CS-RNTI is used to control at least one of downlink transmission and uplink transmission without dynamic scheduling. The downlink transmission is also referred to as, for example, Semi-Persistent Scheduling (SPS), semi-persistent transmission and downlink SPS. Furthermore, the uplink transmission is also referred to as, for example, configured grant-based transmission and uplink configured grant-based transmission. According to configured grant-based transmission, at least one of activation, deactivation and retransmission of PUSCH transmission at a given periodicity may be controlled by DCI whose CRC has been scrambled by the CS-RNTI. According to dynamic grant-based transmission (initial transmission or retransmission), scheduling may be controlled by DCI whose CRC has been scrambled by the C-RNTI.

By controlling the A/N bit order of the HARQ-ACK codebook irrespectively of the MCS table type, it is possible to perform control similar to legacy systems, and consequently suppress an increase in a UE processing load.

### [Option 2]

According to the option 2, the A/N bit order of the HARQ-ACK codebook is controlled based on the type of an MCS table (by taking the type of the MCS table into account) used for reception of a PDSCH. For example, an HARQ-ACK bit for the PDSCH received by using a given MCS table type is arranged in a beginning domain of the HARQ-ACK codebook.

Fig. 8B is a diagram illustrating one example of a case where the A/N bit order in the HARQ-ACK codebook is controlled based on the MCS table type. In this case, a second HARQ-ACK bit for a PDSCH received by using the second MCS table is arranged before a first HARQ-ACK bit for a PDSCH received by using the first MCS table. Consequently, it is possible to arrange in a beginning domain an HARQ-ACK bit of communication (e.g., URLLC) that needs low latency and ultra reliability, so that it is possible to effectively suppress latency.

In addition, the PDSCH received by using the first MCS table may be a PDSCH scheduled by DCI whose CRC has been scrambled by the C-RNTI or the CS-RNTI. Furthermore, the PDSCH received by using the second MCS table may be a PDSCH scheduled by DCI whose CRC has been scrambled by the new RNTI.

### (Third Aspect)

According to the third aspect, at least one of transmission and reception is controlled by using a new RNTI (also referred to as an MCS RNTI).

A UE to which the new RNTI has been configured may apply the new RNTI to following operations (1) to (5). The new RNTI may be configured to the UE by a higher layer. Furthermore, the new RNTI may be an RNTI to be applied to CRC scrambling of DCI used for selection of an MCS table.

### (1) CRC Scrambling of Physical Shared Channel

The new RNTI may be applied to CRC scrambling of a physical shared channel (at least one of PDSCH and PUSCH data).

When the PDSCH is scheduled by the DCI whose CRC has been scrambled by the new RNTI, a UE may control reception assuming that a CRC of the PDSCH scheduled by the DCI is also scrambled by the new RNTI.

Furthermore, when the PUSCH is scheduled by the DCI whose CRC has been scrambled by the new RNTI, the UE may scramble a CRC of the PUSCH, too, scheduled by the DCI by the new RNTI to transmit.

In this case, the CRC only needs to be scrambled by using the same RNTI for the DCI and the PDSCH or the PUSCH, and therefore it is not necessary to retain a plurality of RNTIs in a memory, so that it is possible to realize reduction of a terminal chip size or reduction of power consumption.

### (2) Generation of DMRS Sequence for Physical Shared Channel

The new RNTI may be applied to generation of a Demodulation Reference Signal (e.g., DMRS) sequence for a physical shared channel (at least one of PDSCH and PUSCH data).

When the PDSCH is scheduled by the DCI whose CRC has been scrambled by the new RNTI, the UE may control reception assuming that a downlink DMRS sequence for the PDSCH scheduled by the DCI is generated by using the new RNTI.

Furthermore, when the PUSCH is scheduled by the DCI whose CRC has been scrambled by the new RNTI, the UE may generate (or determine) an uplink DMRS sequence for the PUSCH scheduled by the DCI based on the new RNTI.

In this case, the same RNTI only needs to be used for CRC scrambling of the DCI, and generation of the RS of the PDSCH or the PUSCH, and therefore it is not necessary to retain a plurality of RNTIs in the memory, so that it is possible to realize reduction of the terminal chip size or reduction of power consumption.

### (3) Mapping of PT-RS for Physical Shared Channel

The new RNTI may be applied to mapping (e.g., allocation) of a Phase Tracking Reference Signal (PTRS) for a physical shared channel (at least one of PDSCH and PUSCH data).

When the PDSCH is scheduled by the DCI whose CRC has been scrambled by the new RNTI, the UE may control reception assuming that a downlink PT-RS position for the PDSCH scheduled by the DCI is determined based on the new RNTI.

When the PUSCH is scheduled by the DCI whose CRC has been scrambled by the new RNTI, the UE may determine an uplink PT-RS position for the PUSCH scheduled by the DCI based on the new RNTI.

In this case, the same RNTI only needs to be used for CRC scrambling of the DCI and mapping of the PT-RS of the PDSCH or the PUSCH, therefore it is not necessary to retain a plurality of RNTIs in the memory, so that it is possible to realize reduction of the terminal chip size or reduction of power consumption.

### (4) CRC Scrambling of Physical Control Channel

The new RNTI may be applied to CRC scrambling of a physical shared channel (at least one of a PDSCH and a PUSCH).

When transmitting HARQ-ACK for the PDSCH to which an MCS table 3 has been applied on the PUCCH (or the PUCCH including the HARQ-ACK), the UE may scramble a CRC of a UCI payload transmitted on the PUCCH by the new RNTI. Alternatively, when transmitting CSI that uses a CQI table 3, the UE may scramble the CRC of the UCI payload transmitted on the PUCCH by the new RNTI.

In addition, scrambling that uses the new RNTI may be limited to a case where the UCI payload becomes a given value or more. Consequently, when a different number of CRC bits are used according to a UCI payload size, it is possible to perform appropriate control even in a case where the number of CRC bits is shorter than the new RNTI.

In this case, the same RNTI only needs to be used for CRC scrambling of UCI associated with the DCI, and therefore it is not necessary to retain a plurality of RNTIs in the memory, so that it is possible to realize reduction of the terminal chip size or reduction of power consumption.

### (5) Generation of Physical Uplink Control Channel Sequence

The new RNTI may be applied to generation of a physical uplink control channel (e.g., PUCCH) sequence.

When transmitting HARQ-ACK for a PDSCH to which the MCS table 3 has been applied on the PUCCH (or the PUCCH including the HARQ-ACK), the UE may generate the PUCCH sequence by using the new RNTI.

In this case, the same RNTI only needs to be used for CRC scrambling of UCI associated with the DCI, and therefore it is not necessary to retain a plurality of RNTIs in the memory, so that it is possible to realize reduction of the terminal chip size or reduction of power consumption.

### <Non-Application of New RNTI>

Alternatively, the UE to which the new RNTI has been configured may perform control not to apply the new RNTI to at least one operation of the above-described operations (1) to (5). In this case, another RNTI (e.g., a C-RNTI or a CS-RNTI) may be applied instead of the new RNTI.

### <Variation>

When even at least one HARQ-ACK for a PDSCH scheduled by the DCI to which the new RNTI has been applied is included in a UCI payload of UCI transmitted on a PUCCH or a PUSCH, the UE may scramble the UCI (the UCI to which a CRC is added) based on the new RNTI.

Alternatively, when all HARQ-ACKs included in the UCI payload of the UCI transmitted on the PUCCH or the PUSCH correspond to HARQ-ACKs for the PDSCHs scheduled by the DCI to which the new RNTI has been applied, the UE may scramble the CRC of the UCI (the UCI to which the CRC is added) based on the new RNTI.

Alternatively, when all HARQ-ACKs included in the UCI payload of the UCI transmitted on the PUCCH or the PUSCH correspond to HARQ-ACKs for the PDSCHs scheduled by the DCI to which the new RNTI has been applied, and the UCI does not include a CSI reporting, the UE may scramble the CRC of the UCI (the UCI to which the CRC is added) based on the new RNTI.

Alternatively, even when HARQ-ACK for the PDSCH scheduled by the DCI to which the new RNTI has been applied is multiplexed on the UCI transmitted on the PUCCH or the PUSCH (or irrespectively of whether or not the HARQ-ACK is multiplexed on the UCI), the UE may scramble the CRC of the UCI (the UCI to which the CRC is added) based on the C-RNTI or the CS-RNTI.

### (Fourth Aspect)

According to the fourth aspect, at least one of a max code rate and a beta offset is controlled based on at least one of an MCS table, a CQI table and an RNTI to be applied.

### <Max Code Rate>

A base station may configure a plurality of max code rates per PUCCH Format (PF) to a UE. For example, the base station notifies the UE of information related to a max code rate of a given PF (e.g., at least one of a PF 2, a PF 3 and a PF 4) by a higher layer (e.g., RRC signaling). The base station may include the information (e.g., maxCodeRate) related to the max code rate in a higher layer parameter (e.g., PUCCH-FormatConfig) related to a PUCCH format configuration to notify the UE.

The UE controls transmission of UCI (at least one of HARQ-ACK, a Scheduling Request (SR) and CSI) that uses a PUCCH based on the max code rate notified from the base station. The max code rate of the PUCCH (or the UCI) may be configured separately per UCI (e.g., eMBB UCI and URLLC UCI) of a different communication requirement condition.

For example, a case is assumed where a first max code rate and a second max code rate lower than the first max code rate are configured to the given PF. In this case, when transmitting UCI by using the given PF, the UE may determine which one of the first max code rate and the second max code rate to apply based on a type of the UCI to transmit.

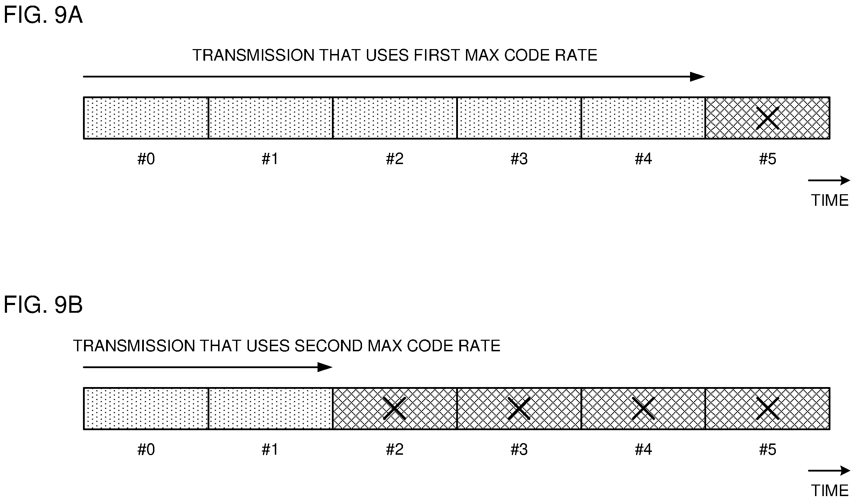

When, for example, transmitting HARQ-ACK for a PDSCH received by using a first MCS table (an MCS table 1 or an MCS table 2) on the PUCCH (e.g., given PF), the UE controls transmission of the PUCCH based on the first max code rate. When, for example, a code rate of UCI to be transmitted in a given slot is the first max code rate or less, the UE transmits the UCI including at least HARQ-ACK by using the PUCCH. On the other hand, when the code rate of the UCI to be transmitted in the given slot exceeds the first max code rate, the UE may perform control to drop the UCI (or the PUCCH) (see Fig. 9A). Fig. 9A illustrates a case where the code rate of the UCI is the first max code rate or less in slots #0 to #4, and the code rate of the UCI exceeds the first max code rate in a slot #5.

Furthermore, when transmitting CSI to which a first CQI table (a CQI table 1 or a CQI table 2) has been applied on the PUCCH (e.g., given PF), the UE controls transmission of the PUCCH based on the first max code rate. When, for example, the code rate of the UCI to be transmitted in the given slot is the first max code rate or less, the UE transmits the UCI including at least the CSI by using the PUCCH. On the other hand, when the code rate of the UCI to be transmitted in the given slot exceeds the first max code rate, the UE may perform control to drop the UCI (or the PUCCH) (see Fig. 9A).

Alternatively, when transmitting HARQ-ACK for a PDSCH received by using a second MCS table (MCS table 3) on the PUCCH (e.g., given PF), the UE controls transmission of the PUCCH based on the second max code rate. When, for example, the code rate of the UCI to be transmitted in the given slot is the second max code rate or less, the UE transmits the UCI including at least HARQ-ACK by using the PUCCH. On the other hand, when the code rate of the UCI to be transmitted in the given slot exceeds the second max code rate, the UE may perform control to drop the UCI (or the PUCCH) (see Fig. 9B). Fig. 9B illustrates a case where the code rate of the UCI is the first max code rate or less in the slots #0 and #1, and the code rate of the UCI exceeds the second max code rate in the slots #2 to #5.

Furthermore, when transmitting the CSI to which a second CQI table (CQI table 3) has been applied on the PUCCH (e.g., given PF), the UE controls transmission of the PUCCH based on the second max code rate. When, for example, the code rate of the UCI to be transmitted in the given slot is the second max code rate or less, the UE transmits the UCI including at least the CSI by using the PUCCH. On the other hand, when the code rate of the UCI to be transmitted in the given slot exceeds the second max code rate, the UE may perform control to drop the UCI (or the PUCCH) (see Fig. 9B).

By configuring the max code rate of the PUCCH (or the UCI) separately per UCI (e.g., UCI related to a different table) of a different communication requirement condition, it is possible to appropriately control transmission of the PUCCH according to the communication requirement condition.

### <Beta Offset>

When piggybacking UCI by using a PUSCH, the UE needs to determine a necessary resource amount for the UCI. The UE may control the resource amount for the UCI to be conveyed on the PUSCH based on information (also referred to as a beta offset or β_{Offset}) used to determine the resource amount.

The base station may transmit the information related to the beta offset to the UE. For example, the base station notifies the UE of the information related to the beta offset by a higher layer (e.g., RRC signaling). The information related to the beta offset (e.g., BetaOffsets for PUSCH) may be included in a higher layer parameter (e.g., PUSCH-Config) related to a PUSCH configuration or a higher layer parameter (e.g., ConfiguredGrantConfig) related to a configured grant configuration to notify the UE.

The UE controls the resource amount of the UCI (at least one of HARQ-ACK, a Scheduling Request (SR) and CSI) to be multiplexed on the PUSCH based on the beta offset notified from the base station. The beta offset may be configured separately per UCI (e.g., the eMBB UCI and the URLLC UCI) of the different communication requirement condition.

For example, a case is assumed where a first beta offset and a second beta offset whose value is lower than the first beta offset are configured. In this case, when transmitting the UCI by using the PUSCH, the UE may determine which one of the first beta offset and the second beta offset to apply based on a type of the UCI to transmit.

When, for example, transmitting HARQ-ACK for a PDSCH received by using the first MCS table (the MCS table 1 or the MCS table 2) on the PUSCH, the UE controls multiplexing of UCI on the PUSCH based on the first beta offset. When, for example, the UCI to be transmitted in a given slot is the first beta offset or less, the UE transmits the UCI including at least HARQ-ACK by using the PUSCH. On the other hand, when the UCI to be transmitted in the given slot exceeds the first beta offset, the UE may perform control not to multiplex the UCI on the PUSCH.

Furthermore, when transmitting CSI to which the first CQI table (the CQI table 1 or the CQI table 2) has been applied on the PUSCH, the UE controls multiplexing of the UCI on the PUSCH based on the first beta offset. When, for example, the UCI to be transmitted in the given slot is the first beta offset or less, the UE transmits the UCI including at least the CSI by using the PUSCH. On the other hand, when the UCI to be transmitted in the given slot exceeds the first beta offset, the UE may perform control not to multiplex the UCI on the PUSCH.

Alternatively, when transmitting HARQ-ACK for a PDSCH received by using the second MCS table (MCS table 3) on the PUSCH, the UE controls multiplexing of the UCI on the PUSCH based on the second beta offset. When, for example, the UCI to be transmitted in the given slot is the second beta offset or less, the UE transmits the UCI including at least HARQ-ACK by using the PUSCH. On the other hand, when the UCI to be transmitted in the given slot exceeds the second beta offset, the UE may perform control not to multiplex the UCI on the PUSCH.

Furthermore, when transmitting the CSI to which the second CQI table (CQI table 3) has been applied on the PUSCH, the UE controls multiplexing of the UCI on the PUSCH based on the second beta offset. When, for example, the UCI to be transmitted in the given slot is the second beta offset or less, the UE transmits the UCI including at least the CSI by using the PUSCH. On the other hand, when the UCI to be transmitted in the given slot exceeds the second beta offset, the UE may perform control not to multiplex the UCI on the PUSCH.

By configuring the beta offset separately per UCI (e.g., UCI related to the different table) of the different communication requirement condition, it is possible to appropriately control transmission of the UCI that uses the PUSCH according to the communication requirement condition.

### (Fifth Aspect)

The fifth aspect will describe transmission/reception processing of data (e.g., unicast data) to which a new RNTI (new MCS RNTI) has been applied.

A UE (e.g., the UE that does not support concurrent transmission and reception) that cannot concurrently perform reception processing and transmission processing of data (e.g., unicast data) that overlaps in a time domain may select and perform one of the reception processing and the transmission processing. The reception processing may be reception processing (e.g., decoding processing) for a PDSCH, or the transmission processing may be transmission processing for a PUSCH. Furthermore, concurrent transmission and reception may be supported in a symbol unit or a slot unit.

For example, the UE may select one of the reception processing and the transmission processing based on an RNTI to be applied to the PDSCH, and an RNTI type to be applied to the PUSCH. For example, the UE preferentially performs processing to which the new RNTI is applied. In addition, the RNTI to be applied to the PDSCH may be an RNTI to be applied to DCI for scheduling the PDSCH. Furthermore, the RNTI to be applied to the PUSCH may be an RNTI to be applied to DCI for scheduling the PUSCH.

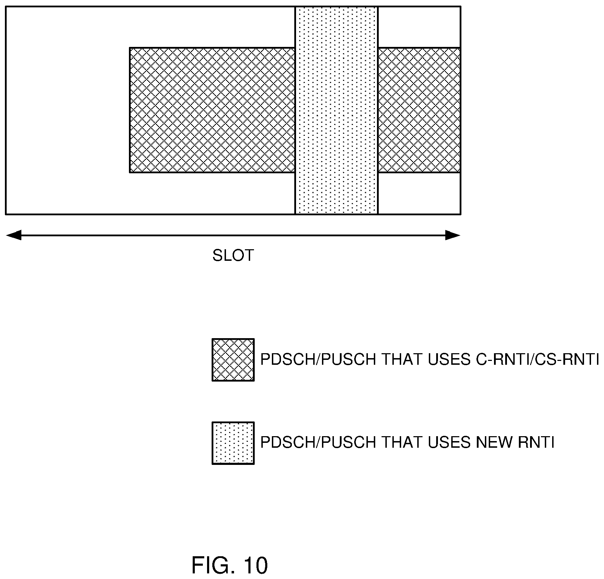

Fig. 10 is a diagram illustrating one example of a case where the PDSCH and the PUSCH overlap. In this case, the UE that does not support concurrent transmission and reception selects one of reception of the PDSCH scheduled (or configured) by using the new RNTI or transmission of the PUSCH scheduled (or configured) by using the new RNTI among the PDSCH and the PUSCH that overlap in a time direction.

When, for example, the RNTI to be applied to the PUSCH is the new RNTI, and the RNTI to be applied to the PDSCH is an RNTI (e.g., a C-RNTI or a CS-RNTI) other than the new RNTI, the UE preferentially transmits the PUSCH. In this case, the UE may cancel reception of the PDSCH.

Alternatively, when the RNTI to be applied to the PDSCH is the new RNTI, and the RNTI to be applied to the PUSCH is an RNTI (e.g., the C-RNTI or the CS-RNTI) other than the new RNTI, the UE preferentially receives the PDSCH. In this case, the UE may cancel transmission of the PUSCH.

Thus, by prioritizing the reception processing of the PDSCH to which a given RNTI (e.g., new RNTI) has been applied or the transmission processing of the PUSCH to which the given RNTI has been applied, it is possible to suppress deterioration of quality of communication (e.g., URLLC) that needs low latency and ultra reliability. In addition, when the PDSCH to which the new RNTI has been applied and the PUSCH to which the new RNTI has been applied overlap, one of the reception processing and the transmission processing may be preferentially performed based on a given condition other than an RNTI type.

Furthermore, control may be performed such that the PDSCH to which the new RNTI has been applied, and a PUSCH to which another RNTI (e.g., the C-RNTI, the CS-RNTI or an SP-CSI RNTI) has been applied do not overlap. Alternatively, control may be performed such that the PUSCH to which the new RNTI has been applied, and a PDSCH to which another RNTI (e.g., the C-RNTI, the CS-RNTI or the SP-CSI RNTI) has been applied do not overlap.

In this case, a base station may control scheduling or configuration of a given UE such that the PDSCH (or the PUSCH) to which the new RNTI has been applied, and another signal or channel do not contend. The UE may control the transmission processing or the reception processing assuming that the PDSCH (or the PUSCH) to which the new RNTI has been applied, and the another signal or channel do not overlap (concurrent transmission and reception are not performed).

Thus, by controlling the given UE such that a PDSCH (or a PUSCH) to which a given RNTI (e.g., new RNTI) has been applied and the PUSCH (or the PDSCH) to which another RNTI has been applied do not concurrently occur, it is possible to suppress deterioration of quality of communication (e.g., URLLC) that needs low latency and ultra reliability.

### (Sixth Aspect)

The sixth aspect will describe UL transmission power control of UL data (e.g., PUSCH) to which a new RNTI (new MCS RNTI) has been applied.

Control may be performed to configure transmission power of a PUSCH to which at least one of a given MCS table and a given RNTI has been applied preferentially over transmission power of another PUSCH. The given MCS table may be an MCS table 3. The given RNTI may be the new RNTI.

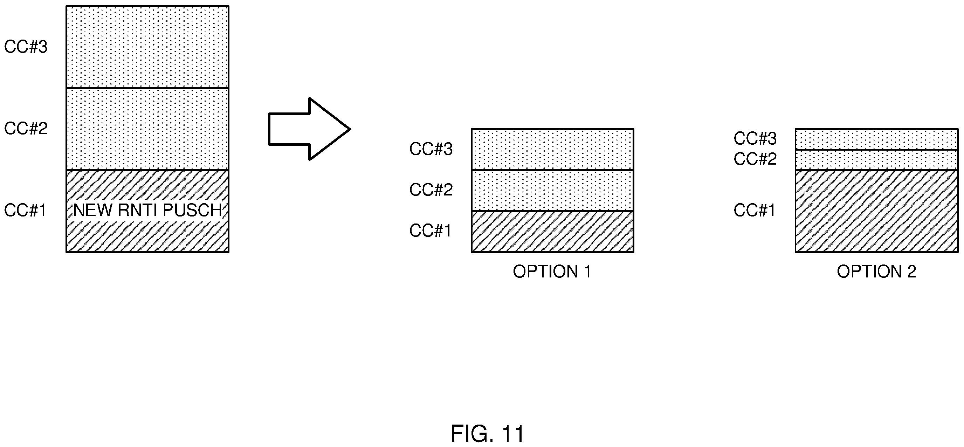

Fig. 11 is a diagram illustrating one example of transmission power control in a case where PUSCH transmission in a plurality of CCs (three CCs in this case) duplicates. This example assumes a case where the PUSCH is not multiplexed on UCI (a PUSCH without UCI multiplexing). Furthermore, a case is assumed where at least one of the given MCS table and the given RNTI is applied to a PUSCH in a CC #1, and the given MCS table and the given RNTI are not applied to other CCs #2 and #3.

When a total value of transmission power of PUSCH transmission in each CC exceeds a given value (maximum transmission power permitted for the UE), i.e., when power limitation occurs, a UE may apply one of a following option 1 and option 2 to control UL transmission power (e.g., power scaling).

### <Option 1>

According to the option 1, the transmission power of the PUSCH is power-scaled (e.g., reduced) irrespectively of an MCS table and an RNTI to be applied to the PUSCH (see the option 1 in Fig. 11). According to the option 1 in Fig. 11, the transmission power of the PUSCHs of the CC #1 to the CC #3 is equally power-scaled. In addition, according to scaling of PUSCH transmission power of each CC, a value to be scaled may be determined based on a rate of the transmission power of the PUSCH configured in advance, or the value of each PUSCH to be scaled may be the same irrespectively of the rate of the transmission power of the PUSCH configured in advance.

When the transmission power of the PUSCH is equally power-scaled irrespectively of the MCS table and the RNTI to be applied to the PUSCH, it is possible to simplify processing of the transmission power in the UE, so that it is possible to suppress an increase in a UE processing load.

### <Option 2>

According to the option 2, a priority of power scaling of the transmission power of the PUSCHs is determined based on the MCS table and the RNTI to be applied to the PUSCH. For example, control is performed to preferentially reserve the transmission power of the PUSCH to which at least one of the given MCS table and the given RNTI has been applied (the option 2 in Fig. 11).

According to the option 2 in Fig. 11, transmission power of PUSCHs of the CC #2 and the CC #3 is power-scaled to reserve transmission power of a PUSCH of the CC #1. For example, control may be performed to apply a value configured in advance to the transmission power of the PUSCH of the CC #1, and allocate remaining transmission power (= transmission power permitted for the UE - the transmission power configured to the PUSCH of the CC #1) to the CC #2 and the CC #3.

By controlling power scaling of the transmission power of the PUSCH by taking into account at least one of the MCS table and the RNTI to be applied to the PUSCH, it is possible to preferentially configure high transmission power of the PUSCH of communication (e.g., URLLC) that needs low latency and ultra reliability. As a result, it is possible to suppress deterioration of quality of communication (e.g., URLLC) that needs low latency and ultra reliability.

### <Variation>

In addition, the option 2 has described the case where power scaling is performed to prioritize the transmission power of the PUSCH to which at least one of the given MCS table and the given RNTI has been applied. However, the present embodiment is not limited to this. When, for example, a total value of transmission power of PUSCHs of a plurality of CCs exceeds a given value (power limitation occurs), the PUSCH to which at least one of the given MCS table and the given RNTI is applied may be prioritized, and transmission of other PUSCHs may be dropped.

For example, in Fig. 11, control may be performed to perform transmission of the PUSCH of the CC #1 by applying transmission power configured in advance, and drop transmission of the PUSCHs of the CC #2 and the CC #3. Consequently, it is possible to reduce a load of UL transmission power of the UE, and preferentially perform PUSCH transmission of communication (e.g., URLLC) that needs low latency and ultra reliability.

In addition, the example of transmission of a PUSCH on which UCI is not multiplexed has been described above. However, the present embodiment is not limited to this. For example, control may be performed to configure transmission power of the PUCCH to which at least one of the given MCS table, a given CQI table and the given RNTI has been applied preferentially over transmission power of other PUCCHs to transmission of the PUCCH, too.

For example, control may be performed to configure transmission power of at least one PUCCH of a PUCCH for transmitting HARQ-ACK for a PDSCH to which the given MCS table has been applied, a PUCCH for transmitting CSI to which the given CQI table (e.g., CQI table 3) has been applied, and a PUCCH to which the given RNTI has been applied preferentially over the transmission power of the other PUCCHs.

Furthermore, control may be performed to configure transmission power of a PUSCH on which given UCI is multiplexed preferentially over transmission power of PUSCHs on which other pieces of UCI are multiplexed. The given UCI may be at least one of HARQ-ACK for the PDSCH to which the given MCS table has been applied, and the CSI to which the given CQI table has been applied.

### (Seventh Aspect)

The seventh aspect will describe a case where multiplexing of UCI (e.g., a CC on which the UCI is multiplexed) is controlled by taking into account at least one of a new RNTI (new MCS RNTI) and a given MCS table.

When a timing to transmit the UCI and a transmission timing of a PUSCH duplicate, a UE can multiplex the UCI on the PUSCH to transmit. When, for example, PUSCHs are concurrently transmitted in a plurality of CCs, the UCI is multiplexed on the PUSCH of a given CC to transmit. In this case, a CC (or the PUSCH) on which the UCI is multiplexed may be determined based on whether or not at least one of the given MCS table and the given RNTI is applied.

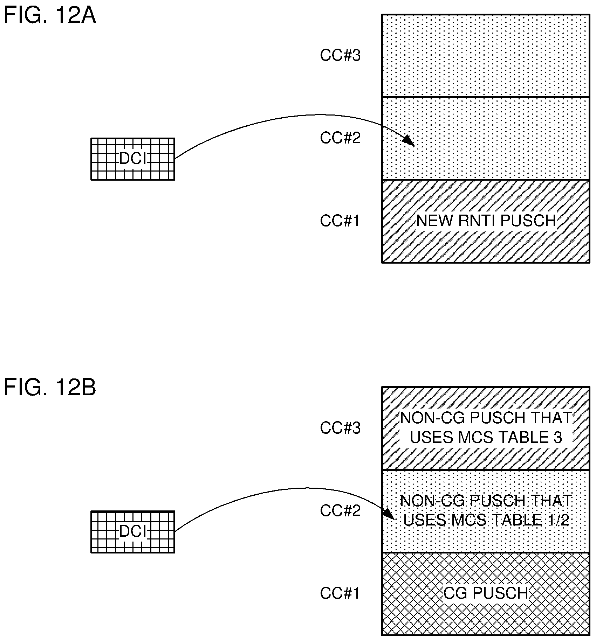

For example, the UE assumes a case where transmission timings of a first PUSCH to which at least one of an MCS table 3 and the new RNTI has been applied, and a second PUSCH to which an MCS table 1 or 2 and an RNTI (e.g., C-RNTI) other than the new RNTI has been applied duplicate. In this case, the UE may perform control to multiplex the UCI on the second PUSCH (see Fig. 12A).

Fig. 12A illustrates a case where, when transmission timings of transmission of the first PUSCH that uses the new RNTI in a CC #1, and transmission of the second PUSCH that uses the RNTI (e.g., C-RNTI) other than the new RNTI in a CC #2 and a CC #3 duplicate, UCI is multiplexed on the CC #2. That is, a priority of multiplexing of UCI on the second PUSCH is configured higher than the priority for the first PUSCH. Consequently, it is possible to configure, for example, a low code rate of the first PUSCH.

Furthermore, when configured grant-based third PUSCH (e.g., a PUSCH that is scheduled by a CS-RNTI) transmission is included as a PUSCH to be concurrently transmitted, the priority of multiplexing of UCI on the configured grant-based third PUSCH may be configured lower than that of the first PUSCH or the second PUSCH.

When a transmission timing of the UCI, and transmission timings of PUSCHs in a plurality of CCs duplicate, a CC (or a PUSCH) on which the UCI is multiplexed may be determined based on the priority according to one of following options 1 to 3.

### <Option 1>

A PUSCH that is scheduled by the C-RNTI or the new RNTI > a PUSCH that is scheduled (or activated) by the CS-RNTI

Thus, by configuring the priority of multiplexing of UCI on the configured grant-based third PUSCH lower than that of the first PUSCH or the second PUSCH, it is possible to reduce a probability that the UCI is multiplexed on a configured grant-based PUSCH that needs to be blind-detected, reduce a probability that a base station needs to blind-detect which PUSCH is a PUSCH on which the UCI has been multiplexed, and simplify a receiver configuration.

### <Option 2>

A PUSCH that is scheduled by the C-RNTI > a PUSCH that is scheduled by the new RNTI > a PUSCH that is scheduled (or activated) by the CS-RNTI

Thus, by configuring the priority of multiplexing of UCI on the configured grant-based third PUSCH and the priority of multiplexing of UCI on the first PUSCH to which the new RNTI is applied lower than that of the second PUSCH, it is possible to reduce a probability that the UCI is multiplexed on a configured grant-based PUSCH that needs to be blind-detected, reduce a probability that the base station needs to blind-detect which PUSCH is a PUSCH on which the UCI has been multiplexed, and simplify the receiver configuration.

### <Option 3>

A grant-based PUSCH that uses the MCS table 1 or 2 > a configured grant-based PUSCH > a PUSCH that uses the MCS table 3 (see Fig. 12B)

Thus, by configuring the priority of multiplexing of UCI on the PUSCH that uses the MCS table 3 and the priority of multiplexing of UCI on the other PUSCHs lower than that of the second PUSCH, it is possible to reduce a probability that a data code rate of the PUSCH that uses the MCS table 3 increases due to UCI multiplexing, and avoid an increase in an error rate. In addition, in Fig. 12B, the configured grant-based PUSCH may be a configured grant-based PUSCH that uses the MCS table 1 or 2.

Thus, by controlling multiplexing of the UCI on the PUSCH such that, for example, a code rate of PUSCH transmission of communication (e.g., URLLC) that needs low latency and ultra reliability does not increase, it is possible to suppress deterioration of quality of communication that needs low latency and ultra reliability.

### (Radio Communication System)

The configuration of the radio communication system according to the present embodiment will be described below. This radio communication system uses at least one combination of a plurality of the above aspects to perform communication.

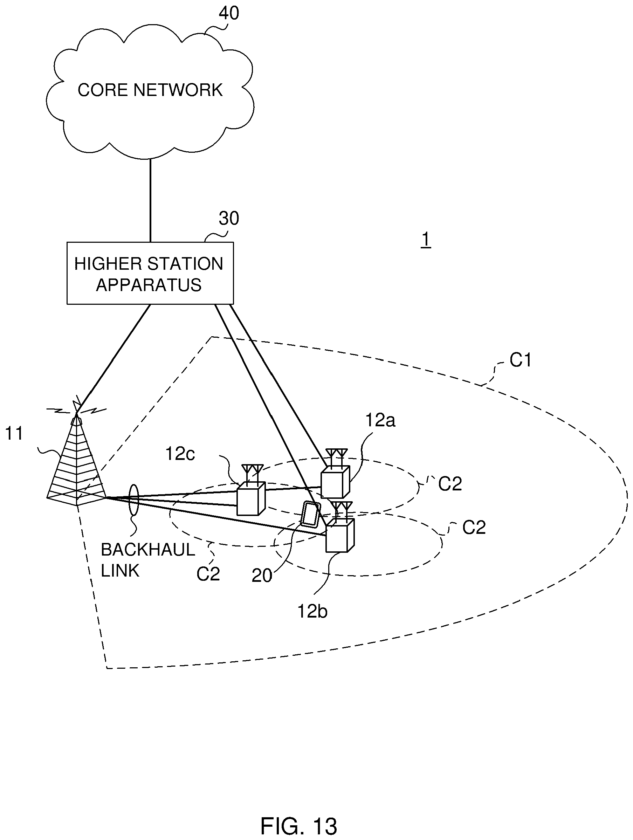

Fig. 13 is a diagram illustrating one example of a schematic configuration of the radio communication system according to the present embodiment. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system.

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA) and the New Radio Access Technology (New-RAT), or a system that realizes these techniques.

The radio communication system 1 includes a radio base station 11 that forms a macro cell C1 of a relatively wide coverage, and radio base stations 12 (12a to 12c) that are located in the macro cell C1 and form small cells C2 narrower than the macro cell C1. Furthermore, a user terminal 20 is located in the macro cell C1 and each small cell C2. An arrangement and the numbers of respective cells and the user terminals 20 are not limited to the aspect illustrated in Fig. 13.

The user terminal 20 can connect with both of the radio base station 11 and the radio base stations 12. The user terminal 20 is assumed to concurrently use the macro cell C1 and the small cells C2 by using CA or DC. Furthermore, the user terminal 20 can apply CA or DC by using a plurality of cells (CCs) (e.g., five CCs or less or six CCs or more).

The user terminal 20 and the radio base station 11 can communicate by using a carrier (also referred to as a legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz or 5 GHz) or may use the same carrier as that used between the user terminal 20 and the radio base station 11. In this regard, a configuration of the frequency band used by each radio base station is not limited to this.

Furthermore, the user terminal 20 can perform communication by using Time Division Duplex (TDD) and/or Frequency Division Duplex (FDD) in each cell. Furthermore, each cell (carrier) may be applied a single numerology or may be applied a plurality of different numerologies.

The numerology may be a communication parameter to be applied to transmission and/or reception of a certain signal and/or channel, and may indicate at least one of, for example, a subcarrier spacing, a bandwidth, a symbol length, a cyclic prefix length, a subframe length, a TTI length, the number of symbols per TTI, a radio frame configuration, filtering processing and windowing processing.

The radio base station 11 and each radio base station 12 (or the two radio base stations 12) may be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink and applies Single Carrier-Frequency Division Multiple Access (SC-FDMA) and/or OFDMA to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or contiguous resource blocks per terminal and causes a plurality of terminals to use respectively different bands to reduce an inter-terminal interference. In this regard, uplink and downlink radio access schemes are not limited to a combination of these schemes, and other radio access schemes may be used.

The radio communication system 1 uses a downlink shared channel (PDSCH: Physical Downlink Shared Channel) shared by each user terminal 20, a broadcast channel (PBCH: Physical Broadcast Channel) and a downlink L1/L2 control channel as downlink channels. User data, higher layer control information and a System Information Block (SIB) are conveyed on the PDSCH. Furthermore, a Master Information Block (MIB) is conveyed on the PBCH.

The downlink L1/L2 control channel includes at least one of downlink control channels (a Physical Downlink Control Channel (PDCCH) and/or an Enhanced Physical Downlink Control Channel (EPDCCH)), a Physical Control Format Indicator Channel (PCFICH), and a Physical Hybrid-ARQ Indicator Channel (PHICH). Downlink Control Information (DCI) including scheduling information of the PDSCH and/or the PUSCH is conveyed on the PDCCH.

In addition, the scheduling information may be notified by the DCI. For example, DCI for scheduling DL data reception may be referred to as a DL assignment, and DCI for scheduling UL data transmission may be referred to as a UL grant.

The number of OFDM symbols used for the PDCCH is conveyed on the PCFICH. Transmission acknowledgement information (also referred to as, for example, retransmission control information, HARQ-ACK or ACK/NACK) of a Hybrid Automatic Repeat reQuest (HARQ) for the PUSCH is conveyed on the PHICH. The EPDCCH is subjected to frequency division multiplexing with the PDSCH (downlink shared data channel) and is used to convey DCI similar to the PDCCH.

The radio communication system 1 uses an uplink shared channel (PUSCH: Physical Uplink Shared Channel) shared by each user terminal 20, an uplink control channel (PUCCH: Physical Uplink Control Channel), and a random access channel (PRACH: Physical Random Access Channel) as uplink channels. User data and higher layer control information are conveyed on the PUSCH. Furthermore, downlink radio link quality information (CQI: Channel Quality Indicator), transmission acknowledgement information and a Scheduling Request (SR) are conveyed on the PUCCH. A random access preamble for establishing connection with a cell is conveyed on the PRACH.

The radio communication system 1 conveys a Cell-specific Reference Signal (CRS), a Channel State Information-Reference Signal (CSI-RS), a DeModulation Reference Signal (DMRS) and a Positioning Reference Signal (PRS) as downlink reference signals. Furthermore, the radio communication system 1 conveys a Sounding Reference Signal (SRS) and a DeModulation Reference Signal (DMRS) as uplink reference signals. In this regard, the DMRS may be referred to as a user terminal-specific reference signal (UE-specific reference signal). Furthermore, a reference signal to be conveyed is not limited to these.

### <Radio Base Station>

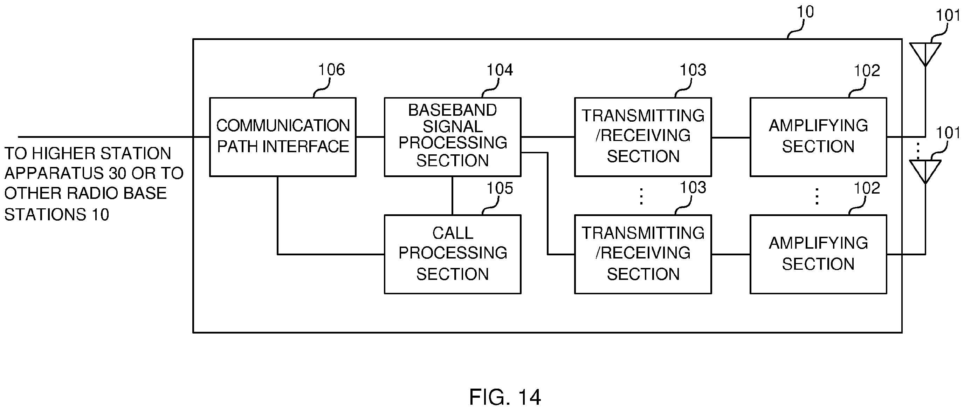

Fig. 14 is a diagram illustrating one example of an overall configuration of the radio base station according to the present embodiment. The radio base station 10 includes pluralities of transmission/reception antennas 101, amplifying sections 102 and transmitting/receiving sections 103, a baseband signal processing section 104, a call processing section 105 and a communication path interface 106. In this regard, the radio base station 10 only needs to be configured to include one or more of each of the transmission/reception antennas 101, the amplifying sections 102 and the transmitting/receiving sections 103.

User data transmitted from the radio base station 10 to the user terminal 20 on downlink is input from the higher station apparatus 30 to the baseband signal processing section 104 via the communication path interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the user data, and transfers the user data to each transmitting/receiving section 103. Furthermore, the baseband signal processing section 104 performs transmission processing such as channel coding and inverse fast Fourier transform on a downlink control signal, too, and transfers the downlink control signal to each transmitting/receiving section 103.

Each transmitting/receiving section 103 converts a baseband signal precoded and output per antenna from the baseband signal processing section 104 into a radio frequency range, and transmits a radio frequency signal. The radio frequency signal subjected to frequency conversion by each transmitting/receiving section 103 is amplified by each amplifying section 102, and is transmitted from each transmission/reception antenna 101. The transmitting/receiving sections 103 can comprise transmitters/receivers, transmission/reception circuits or transmission/reception apparatuses described based on a common knowledge in a technical field according to the present disclosure. In this regard, the transmitting/receiving sections 103 may be configured as an integrated transmitting/receiving section or may comprise transmission sections and reception sections.

Meanwhile, each amplifying section 102 amplifies a radio frequency signal received by each transmission/reception antenna 101 as an uplink signal. Each transmitting/receiving section 103 receives the uplink signal amplified by each amplifying section 102. Each transmitting/receiving section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on user data included in the input uplink signal, and transfers the user data to the higher station apparatus 30 via the communication path interface 106. The call processing section 105 performs call processing (such as configuration and release) of a communication channel, state management of the radio base station 10 and radio resource management.

The communication path interface 106 transmits and receives signals to and from the higher station apparatus 30 via a given interface. Furthermore, the communication path interface 106 may transmit and receive (backhaul signaling) signals to and from the another radio base station 10 via an inter-base station interface (e.g., optical fibers compliant with the Common Public Radio Interface (CPRI) or the X2 interface).

In addition, each transmitting/receiving section 103 may further include an analog beam forming section that performs analog beam forming. The analog beam forming section can comprise an analog beam forming circuit (e.g., a phase shifter or a phase shift circuit) or an analog beam forming apparatus (e.g., a phase shifter) described based on the common knowledge in the technical field according to the present invention. Furthermore, each transmission/reception antenna 101 can comprise an array antenna, for example. Furthermore, each transmitting/receiving section 103 is configured to be able to apply single BF and multiple BF.

Furthermore, each transmitting/receiving section 103 transmits a Downlink (DL) signal (including at least one of a DL data signal (downlink shared channel), a DL control signal (downlink control channel) and a DL reference signal) to the user terminal 20, and receives an Uplink (UL) signal (including at least one of a UL data signal, a UL control signal and a UL reference signal) from the user terminal 20.

Furthermore, each transmitting/receiving section 103 receives Channel State Information (CSI) for which at least one of a first Channel Quality Indicator (CQI) table and a second CQI table in which a code rate lower than a minimum code rate specified in the first CQI table has been specified has been used. Furthermore, each transmitting/receiving section 103 transmits DCI including at least one of a first Modulation and Coding Scheme (MCS) table and a second MCS table in which a code rate lower than a minimum code rate specified in the first MCS table has been specified.

Furthermore, each transmitting/receiving section 103 may transmit a DL signal or a DL channel to which a given RNTI has been applied, and receive a UL signal or a UL channel to which the given RNTI has been applied (third aspect).

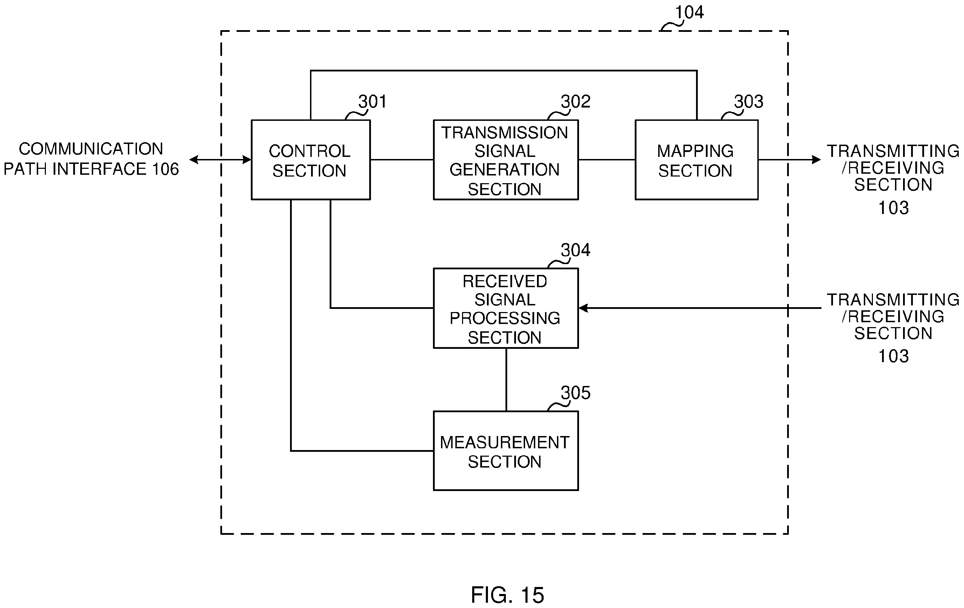

Fig. 15 is a diagram illustrating one example of a function configuration of the radio base station according to the present embodiment. In addition, this example mainly illustrates function blocks of characteristic portions according to the present embodiment, and may assume that the radio base station 10 includes other function blocks, too, that are necessary for radio communication.

The baseband signal processing section 104 includes at least a control section (scheduler) 301, a transmission signal generation section 302, a mapping section 303, a received signal processing section 304 and a measurement section 305. In addition, these components only need to be included in the radio base station 10, and part or all of the components may not be included in the baseband signal processing section 104.

The control section (scheduler) 301 controls the entire radio base station 10. The control section 301 can comprise a controller, a control circuit or a control apparatus described based on the common knowledge in the technical field according to the present disclosure.

The control section 301 controls, for example, signal generation of the transmission signal generation section 302 and signal allocation of the mapping section 303. Furthermore, the control section 301 controls signal reception processing of the received signal processing section 304 and signal measurement of the measurement section 305.

The control section 301 controls scheduling (e.g., resource allocation) of system information, a downlink data signal (e.g., a signal that is transmitted on the PDSCH), and a downlink control signal (e.g., a signal that is transmitted on the PDCCH and/or the EPDCCH and is, for example, transmission acknowledgement information). Furthermore, the control section 301 controls generation of a downlink control signal and a downlink data signal based on a result obtained by deciding whether or not it is necessary to perform retransmission control on an uplink data signal.

Furthermore, when configuring a CQI table separately per cell, the control section 301 performs control not to configure different CQI tables (i.e., control to configure the same CQI table) to a plurality of cells included in a given group. Alternatively, the control section 301 may control reception processing assuming that the UE transmits CSI by prioritizing one of first CSI based on a first CQI table and second CSI based on the second CQI table.

Furthermore, when configuring an MCS table separately per cell, the control section 301 may perform control not to configure different MCS tables (i.e., control to configure the same MCS table) to a plurality of cells included in the given group. Alternatively, the control section 301 may control reception processing assuming that the UE transmits a transmission acknowledgement signal by prioritizing one of a first transmission acknowledgement signal for a downlink shared channel that uses the first MCS table, and a second transmission acknowledgement signal for a downlink shared channel that uses the second MCS table.

Furthermore, the control section 301 may control an RNTI to be applied to the DL signal or the DL channel, and an RNTI to be applied to the UL signal or the UL channel (third aspect). Furthermore, the control section 301 may control at least one of a max code rate and a beta offset to be applied to each cell based on at least one of the MCS table, the CQI table and an RNTI type to be applied (fourth aspect).

Furthermore, the control section 301 may control at least one of timings of UL instruction and DL scheduling (fifth aspect), UL transmission power (sixth aspect) and a PUSCH on which DCI is multiplexed (seventh aspect) based on at least one of the MCS table, the CQI table and the RNTI type to be applied.

The transmission signal generation section 302 generates a downlink signal (such as a downlink control signal, a downlink data signal or a downlink reference signal) based on an instruction from the control section 301, and outputs the downlink signal to the mapping section 303. The transmission signal generation section 302 can comprise a signal generator, a signal generating circuit or a signal generating apparatus described based on the common knowledge in the technical field according to the present disclosure.

The transmission signal generation section 302 generates, for example, a DL assignment for giving notification of downlink data allocation information, and/or a UL grant for giving notification of uplink data allocation information based on the instruction from the control section 301. The DL assignment and the UL grant are both DCI, and conform to a DCI format. Furthermore, the transmission signal generation section 302 performs encoding processing and modulation processing on the downlink data signal according to a code rate and a modulation scheme determined based on Channel State Information (CSI) from each user terminal 20.

The mapping section 303 maps the downlink signal generated by the transmission signal generation section 302, on given radio resources based on the instruction from the control section 301, and outputs the downlink signal to each transmitting/receiving section 103. The mapping section 303 can comprise a mapper, a mapping circuit or a mapping apparatus described based on the common knowledge in the technical field according to the present disclosure.

The received signal processing section 304 performs reception processing (e.g., demapping, demodulation and decoding) on a received signal input from each transmitting/receiving section 103. In this regard, the received signal is, for example, an uplink signal (such as an uplink control signal, an uplink data signal or an uplink reference signal) transmitted from the user terminal 20. The received signal processing section 304 can comprise a signal processor, a signal processing circuit or a signal processing apparatus described based on the common knowledge in the technical field according to the present disclosure.

The received signal processing section 304 outputs information decoded by the reception processing to the control section 301. When, for example, receiving the PUCCH including HARQ-ACK, the received signal processing section 304 outputs the HARQ-ACK to the control section 301. Furthermore, the received signal processing section 304 outputs the received signal and/or the signal after the reception processing to the measurement section 305.

The measurement section 305 performs measurement related to the received signal. The measurement section 305 can comprise a measurement instrument, a measurement circuit or a measurement apparatus described based on the common knowledge in the technical field according to the present disclosure.

For example, the measurement section 305 may perform Radio Resource Management (RRM) measurement or Channel State Information (CSI) measurement based on the received signal. The measurement section 305 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 305 may output a measurement result to the control section 301.

### <User Terminal>

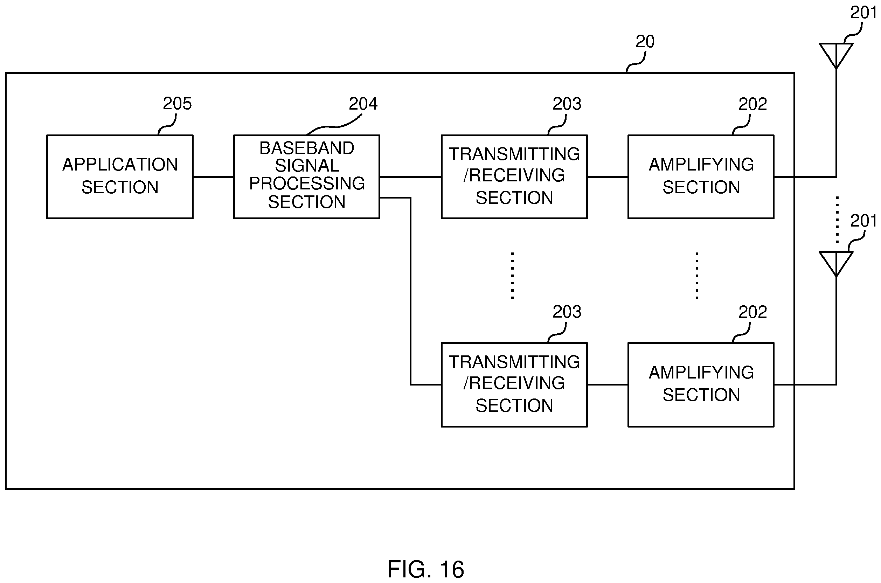

Fig. 16 is a diagram illustrating one example of an overall configuration of the user terminal according to the present embodiment. The user terminal 20 includes pluralities of transmission/reception antennas 201, amplifying sections 202 and transmitting/receiving sections 203, a baseband signal processing section 204 and an application section 205. In this regard, the user terminal 20 only needs to be configured to include one or more of each of the transmission/reception antennas 201, the amplifying sections 202 and the transmitting/receiving sections 203.

Each amplifying section 202 amplifies a radio frequency signal received at each transmission/reception antenna 201. Each transmitting/receiving section 203 receives a downlink signal amplified by each amplifying section 202. Each transmitting/receiving section 203 performs frequency conversion on the received signal into a baseband signal, and outputs the baseband signal to the baseband signal processing section 204. The transmitting/receiving sections 203 can comprise transmitters/receivers, transmission/reception circuits or transmission/reception apparatuses described based on the common knowledge in the technical field according to the present disclosure. In this regard, the transmitting/receiving sections 203 may be configured as an integrated transmitting/receiving section or may comprise transmission sections and reception sections.

The baseband signal processing section 204 performs FFT processing, error correcting decoding and retransmission control reception processing on the input baseband signal. The baseband signal processing section 204 transfers downlink user data to the application section 205. The application section 205 performs processing related to layers higher than a physical layer and an MAC layer. Furthermore, the baseband signal processing section 204 may transfer broadcast information of the downlink data, too, to the application section 205.

On the other hand, the application section 205 inputs uplink user data to the baseband signal processing section 204. The baseband signal processing section 204 performs retransmission control transmission processing (e.g., HARQ transmission processing), channel coding, precoding, Discrete Fourier Transform (DFT) processing and IFFT processing on the uplink user data, and transfers the uplink user data to each transmitting/receiving section 203.

Each transmitting/receiving section 203 converts the baseband signal output from the baseband signal processing section 204 into a radio frequency range, and transmits a radio frequency signal. The radio frequency signal subjected to the frequency conversion by each transmitting/receiving section 203 is amplified by each amplifying section 202, and is transmitted from each transmission/reception antenna 201.

In addition, each transmitting/receiving section 203 may further include an analog beam forming section that performs analog beam forming. The analog beam forming section can comprise an analog beam forming circuit (e.g., a phase shifter or a phase shift circuit) or an analog beam forming apparatus (e.g., a phase shifter) described based on the common knowledge in the technical field according to the present invention. Furthermore, each transmission/reception antenna 201 can comprise an array antenna, for example. Furthermore, each transmitting/receiving section 203 is configured to be able to apply single BF and multiple BF.

Furthermore, each transmitting/receiving section 203 receives the Downlink (DL) signal (including at least one of the DL data signal (downlink shared channel), the DL control signal (downlink control channel) and the DL reference signal) from the radio base station 10, and transmits the Uplink (UL) signal (including at least one of the UL data signal, the UL control signal and the UL reference signal) to the radio base station 10.

Furthermore, each transmitting/receiving section 203 transmits the Channel State Information (CSI) by using at least one of the first Channel Quality Indicator (CQI) table and the second CQI table in which the code rate lower than the minimum code rate specified in the first CQI table has been specified. Furthermore, each transmitting/receiving section 203 may receive a downlink shared channel by using at least one of the first Modulation and Coding Scheme (MCS) table and the second MCS table in which the code rate lower than the minimum code rate specified in the first MCS table has been specified.

Furthermore, each transmitting/receiving section 203 may receive the DL signal or the DL channel to which the given RNTI has been applied, and transmit the UL signal or the UL channel to which the given RNTI has been applied (third aspect).

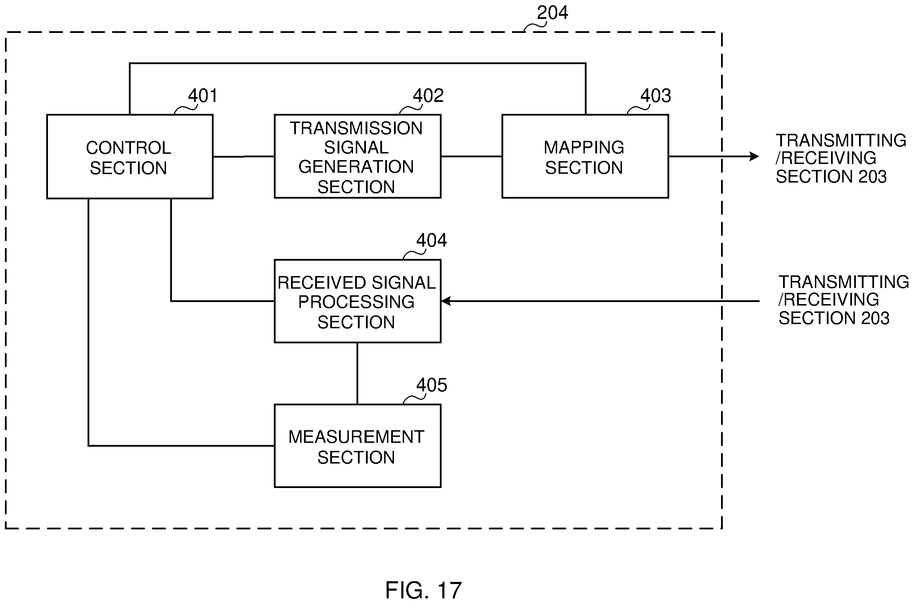

Fig. 17 is a diagram illustrating one example of a function configuration of the user terminal according to the present embodiment. In addition, this example mainly illustrates function blocks of characteristic portions according to the present embodiment, and may assume that the user terminal 20 includes other function blocks, too, that are necessary for radio communication.

The baseband signal processing section 204 of the user terminal 20 includes at least a control section 401, a transmission signal generation section 402, a mapping section 403, a received signal processing section 404 and a measurement section 405. In addition, these components only need to be included in the user terminal 20, and part or all of the components may not be included in the baseband signal processing section 204.

The control section 401 controls the entire user terminal 20. The control section 401 can comprise a controller, a control circuit or a control apparatus described based on the common knowledge in the technical field according to the present disclosure.

The control section 401 controls, for example, signal generation of the transmission signal generation section 402 and signal allocation of the mapping section 403. Furthermore, the control section 401 controls signal reception processing of the received signal processing section 404 and signal measurement of the measurement section 405.

The control section 401 obtains from the received signal processing section 404 a downlink control signal and a downlink data signal transmitted from the radio base station 10. The control section 401 controls generation of an uplink control signal and/or an uplink data signal based on a result obtained by deciding whether or not it is necessary to perform retransmission control on the downlink control signal and/or the downlink data signal.

Furthermore, when a CQI table is configured separately per cell, the control section 401 assumes that the different CQI tables are not configured to a plurality of cells included in the given group. Alternatively, the control section 401 may control transmission of the CSI by prioritizing one of the first CSI based on the first CQI table and the second CSI based on the second CQI table.

When, for example, a transmission timing of the first CSI based on the first CQI table and a transmission timing of the second CSI based on the second CQI table duplicate, the control section 401 performs control not to transmit the first CSI.

Alternatively, when the transmission timing of the first CSI based on the first CQI table and the transmission timing of the second CSI based on the second CQI table duplicate, the control section 401 may perform control to multiplex and transmit the first CSI and the second CSI within a range of a given condition (e.g., a range in which, for example, a code rate is a given value or less). Outside the range of the given condition, the control section 401 may perform control not to transmit one CSI (e.g., first CSI).

Furthermore, when the MCS table is configured separately per cell, the control section 401 may assume that the different MCS tables are not configured to a plurality of cells included in the given group. Alternatively, the control section 401 may control transmission of the transmission acknowledgement signal by prioritizing one of the first transmission acknowledgement signal for the downlink shared channel that uses the first MCS table and the second transmission acknowledgement signal for the downlink shared channel that uses the second MCS table.

When, for example, a transmission timing of the first transmission acknowledgement signal and a transmission timing of the second transmission acknowledgement signal duplicate, the control section 401 performs control not to transmit the first transmission acknowledgement signal.

Alternatively, when the transmission timing of the first transmission acknowledgement signal and the transmission timing of the second transmission acknowledgement signal duplicate, the control section 401 may perform control to multiplex and transmit the first transmission acknowledgement signal and the second transmission acknowledgement signal within the range of the given condition (e.g., the range in which, for example, the code rate is the given value or less). Outside the range of the given condition, the control section 401 may perform control not to transmit one transmission acknowledgement signal (e.g., first transmission acknowledgement signal).

Furthermore, the control section 401 may control the RNTI to be applied to the DL signal or the DL channel, and the RNTI to be applied to the UL signal or the UL channel (third aspect). Furthermore, the control section 401 may control at least one of the max code rate and the beta offset to be applied to each cell based on at least one of the MCS table, the CQI table and an RNTI type to be applied (fourth aspect).

Furthermore, the control section 401 may control at least one of control of UL transmission and DL reception (fifth aspect), control of UL transmission power (sixth aspect) and control of a PUSCH on which the DCI is multiplexed (seventh aspect) based on at least one of the MCS table, the CQI table and the RNTI type to be applied.

The transmission signal generation section 402 generates an uplink signal (such as an uplink control signal, an uplink data signal or an uplink reference signal) based on an instruction from the control section 401, and outputs the uplink signal to the mapping section 403. The transmission signal generation section 402 can comprise a signal generator, a signal generating circuit or a signal generating apparatus described based on the common knowledge in the technical field according to the present disclosure.

The transmission signal generation section 402 generates, for example, an uplink control signal related to transmission acknowledgement information (HARQ-ACK) and Channel State Information (CSI) based on the instruction from the control section 401. Furthermore, the transmission signal generation section 402 generates an uplink data signal based on the instruction from the control section 401. When, for example, the downlink control signal notified from the radio base station 10 includes a UL grant, the transmission signal generation section 402 is instructed by the control section 401 to generate an uplink data signal.

The mapping section 403 maps the uplink signal generated by the transmission signal generation section 402, on radio resources based on the instruction from the control section 401, and outputs the uplink signal to each transmitting/receiving section 203. The mapping section 403 can comprise a mapper, a mapping circuit or a mapping apparatus described based on the common knowledge in the technical field according to the present disclosure.

The received signal processing section 404 performs reception processing (e.g., demapping, demodulation and decoding) on the received signal input from each transmitting/receiving section 203. In this regard, the received signal is, for example, a downlink signal (such as a downlink control signal, a downlink data signal or a downlink reference signal) transmitted from the radio base station 10. The received signal processing section 404 can comprise a signal processor, a signal processing circuit or a signal processing apparatus described based on the common knowledge in the technical field according to the present disclosure. Furthermore, the received signal processing section 404 can constitute the reception section according to the present disclosure.

The received signal processing section 404 outputs information decoded by the reception processing to the control section 401. The received signal processing section 404 outputs, for example, broadcast information, system information, an RRC signaling and DCI to the control section 401. Furthermore, the received signal processing section 404 outputs the received signal and/or the signal after the reception processing to the measurement section 405.

The measurement section 405 performs measurement related to the received signal. The measurement section 405 can comprise a measurement instrument, a measurement circuit or a measurement apparatus described based on the common knowledge in the technical field according to the present disclosure.

For example, the measurement section 405 may perform RRM measurement or CSI measurement based on the received signal. The measurement section 405 may measure received power (e.g., RSRP), received quality (e.g., RSRQ, an SINR or an SNR), a signal strength (e.g., RSSI) or channel information (e.g., CSI). The measurement section 405 may output a measurement result to the control section 401.

### (Hardware Configuration)

In addition, the block diagrams used to describe the above embodiment illustrate blocks in function units. These function blocks (components) are realized by an arbitrary combination of at least one of hardware and software. Furthermore, a method for realizing each function block is not limited in particular. That is, each function block may be realized by using one physically or logically coupled apparatus or may be realized by using a plurality of these apparatuses formed by connecting two or more physically or logically separate apparatuses directly or indirectly (by using, for example, wired connection or radio connection). Each function block may be realized by combining software with the above one apparatus or a plurality of above apparatuses.

In this regard, the functions include judging, determining, deciding, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning, yet are not limited to these. For example, a function block (component) that causes transmission to function may be referred to as a transmitting unit or a transmitter. As described above, the method for realizing each function block is not limited in particular.

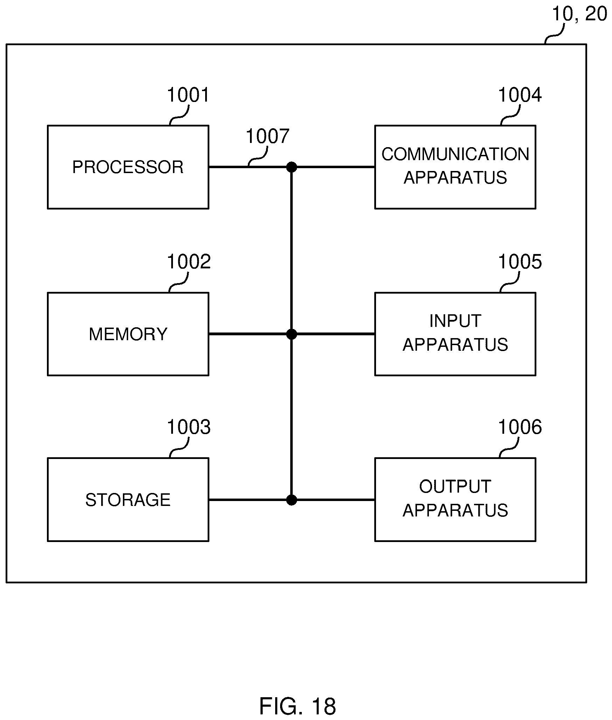

For example, the base station and the user terminal according to the one embodiment of the present disclosure may function as computers that perform processing of the radio communication method according to the present disclosure. Fig. 18 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the base station 10 and the user terminal 20 may be configured to include one or a plurality of apparatuses illustrated in Fig. 18 or may be configured without including part of the apparatuses.

For example, Fig. 18 illustrates the only one processor 1001. However, there may be a plurality of processors. Furthermore, processing may be executed by 1 processor or processing may be executed by 2 or more processors concurrently or successively or by using another method. In addition, the processor 1001 may be implemented by 1 or more chips.

Each function of the base station 10 and the user terminal 20 is realized by, for example, causing hardware such as the processor 1001 and the memory 1002 to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may comprise a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from at least one of the storage 1003 and the communication apparatus 1004 out to the memory 1002, and executes various types of processing according to these programs, software module or data. As the programs, programs that cause the computer to execute at least part of the operations described in the above-described embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may comprise at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the one embodiment of the present disclosure.

The storage 1003 is a computer-readable recording medium, and may comprise at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via at least one of a wired network and a radio network, and is also referred to as, for example, a network device, a network controller, a network card and a communication module. The communication apparatus 1004 may be configured to include a high frequency switch, a duplexer, a filter and a frequency synthesizer to realize at least one of, for example, Frequency Division Duplex (FDD) and Time Division Duplex (TDD). For example, the above-described transmission/reception antennas 101 (201), amplifying sections 102 (202), transmitting/receiving sections 103 (203) and communication path interface 106 may be realized by the communication apparatus 1004. Each transmitting/receiving section 103 may be physically or logically separately implemented as a transmission section 103a and a reception section 103b.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be a single bus or may be buses different for different apparatuses.

Furthermore, the base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or entirety of each function block. For example, the processor 1001 may be implemented by using at least one of these types of hardware.

### (Modified Example)

In addition, each term that has been described in the present disclosure and each term that is necessary to understand the present disclosure may be replaced with terms having identical or similar meanings. For example, at least one of a channel and a symbol may be a signal (signaling). Furthermore, a signal may be a message. A reference signal can be also abbreviated as an RS (Reference Signal), or may be referred to as a pilot or a pilot signal depending on standards to be applied. Furthermore, a Component Carrier (CC) may be referred to as a cell, a frequency carrier and a carrier frequency.

A radio frame may include one or a plurality of durations (frames) in a time domain. Each of one or a plurality of durations (frames) that constitutes a radio frame may be referred to as a subframe. Furthermore, the subframe may include one or a plurality of slots in the time domain. The subframe may be a fixed time duration (e.g., 1 ms) that does not depend on the numerologies.

In this regard, the numerology may be a communication parameter to be applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in a frequency domain, and specific windowing processing performed by the transceiver in a time domain.

The slot may include one or a plurality of symbols (Orthogonal Frequency Division Multiplexing (OFDM) symbols or Single Carrier-Frequency Division Multiple Access (SC-FDMA) symbols) in the time domain. Furthermore, the slot may be a time unit based on the numerologies.

The slot may include a plurality of mini slots. Each mini slot may include one or a plurality of symbols in the time domain. Furthermore, the mini slot may be referred to as a subslot. The mini slot may include a smaller number of symbols than those of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for conveying signals. The other corresponding names may be used for the radio frame, the subframe, the slot, the mini slot and the symbol. In addition, time units such as a frame, a subframe, a slot, a mini slot and a symbol in the present disclosure may be interchangeably read.

For example, 1 subframe may be referred to as a Transmission Time Interval (TTI), a plurality of contiguous subframes may be referred to as TTIs, or 1 slot or 1 mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling of radio communication. For example, in the LTE system, the base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block or codeword, or may be a processing unit of scheduling or link adaptation. In addition, when the TTI is given, a time period (e.g., the number of symbols) in which a transport block, a code block or a codeword is actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that constitute a minimum time unit of the scheduling may be controlled.

The TTI having the time duration of 1 ms may be referred to as a general TTI (TTIs according to LTE Rel. 8 to 12), a normal TTI, a long TTI, a general sub frame, a normal subframe, a long subframe or a slot. A TTI shorter than the general TTI may be referred to as a reduced TTI, a short TTI, a partial or fractional TTI, a reduced subframe, a short subframe, a mini slot, a subslot or a slot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of 1 slot, 1 mini slot, 1 subframe or 1 TTI. 1 TTI or 1 subframe may each include one or a plurality of resource blocks.

In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

A Bandwidth Part (BWP) (that may be referred to as a partial bandwidth) may mean a subset of contiguous common Resource Blocks (common RBs) for a certain numerology in a certain carrier. In this regard, the common RB may be specified by an RB index based on a common reference point of the certain carrier. A PRB may be defined based on a certain BWP, and may be numbered in the certain BWP.

The BWP may include a BWP for UL (UL BWP) and a BWP for DL (DL BWP). One or a plurality of BWPs in 1 carrier may be configured to the UE.

At least one of the configured BWPs may be active, and the UE may not assume that a given signal/channel is transmitted and received outside the active BWP. In addition, a "cell" and a "carrier" in the present disclosure may be read as a "BWP".

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and the parameters described in the present disclosure may be expressed by using absolute values, may be expressed by using relative values with respect to given values or may be expressed by using other corresponding information. For example, a radio resource may be instructed by a given index.

Names used for parameters in the present disclosure are in no respect restrictive names. Furthermore, numerical expressions that use these parameters may be different from those explicitly disclosed in the present disclosure. Various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in the present disclosure may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or arbitrary combinations of these.

Furthermore, the information and the signals can be output at least one of from a higher layer to a lower layer and from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspects/embodiment described in the present disclosure and may be performed by using other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs)) and radio techniques (e.g., infrared rays and microwaves), at least ones of these wired techniques and radio techniques are included in a definition of the transmission media.

The terms "system" and "network" used in the present disclosure can be interchangeably used.

In the present disclosure, terms such as "precoding", a "precoder", a "weight (precoding weight)", "Quasi-Co-Location (QCL)", "transmission power", "phase rotation", an "antenna port", an "antenna port group", a "layer", "the number of layers", a "rank", a "beam", a "beam width", a "beam angle", an "antenna", an "antenna element" and a panel" can be interchangeably used.

In the present disclosure, terms such as a "base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmission/Reception Point (TRP)", a "panel", a "cell", a "sector", a "cell group", a "carrier" and a "component carrier" can be interchangeably used. The base station is also referred to as terms such as a macro cell, a small cell, a femtocell or a picocell.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of at least one of the base station and the base station subsystem that provide a communication service in this coverage.

In the present disclosure, the terms "Mobile Station (MS)", "user terminal", "user apparatus (UE: User Equipment)" and "terminal" can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as a transmission apparatus, a reception apparatus or a communication apparatus. In addition, at least one of the base station and the mobile station may be a device mounted on a movable body or the movable body itself. The movable body may be a vehicle (e.g., a car or an airplane), may be a movable body (e.g., a drone or a self-driving car) that moves unmanned or may be a robot (a manned type or an unmanned type). In addition, at least one of the base station and the mobile station includes an apparatus, too, that does not necessarily move during a communication operation. For example, at least one of the base station and the mobile station may be an Internet of Things (IoT) device such as a sensor.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as, for example, Device-to-Device (D2D) or Vehicle-to-Everything (V2X)). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel and the downlink channel may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs) yet are not limited to these) other than the base stations or a combination of these.

Each aspect/embodiment described in the present disclosure may be used alone, may be used in combination or may be switched and used when carried out. Furthermore, orders of the processing procedures, the sequences and the flowchart according to each aspect/embodiment described in the present disclosure may be rearranged unless contradictions arise. For example, the method described in the present disclosure presents various step elements by using an exemplary order and is not limited to the presented specific order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods, or next-generation systems that are expanded based on these systems. Furthermore, a plurality of systems may be combined (e.g., a combination of LTE or LTE-A and 5G) and applied.

The phrase "based on" used in the present disclosure does not mean "based only on" unless specified otherwise. In other words, the phrase "based on" means both of "based only on" and "based at least on".

Every reference to elements that use names such as "first" and "second" used in the present disclosure does not generally limit the quantity or the order of these elements. These names can be used in the present disclosure as a convenient method for distinguishing between two or more elements. Hence, the reference to the first and second elements does not mean that only two elements can be employed or the first element should precede the second element in some way.

The term "deciding (determining)" used in the present disclosure includes diverse operations in some cases. For example, "deciding (determining)" may be regarded to "decide (determine)" judging, calculating, computing, processing, deriving, investigating, looking up, search and inquiry (e.g., looking up in a table, a database or another data structure), and ascertaining.

Furthermore, "deciding (determining)" may be regarded to "decide (determine)" receiving (e.g., receiving information), transmitting (e.g., transmitting information), input, output and accessing (e.g., accessing data in a memory).

Furthermore, "deciding (determining)" may be regarded to "decide (determine)" resolving, selecting, choosing, establishing and comparing. That is, "deciding (determining)" may be regarded to "decide (determine)" some operation.

Furthermore, "deciding (determining)" may be read as "assuming", "expecting" and "considering".

The words "connected" and "coupled" used in the present disclosure or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using 1 or more electric wires, cables or printed electrical connection, and by using electromagnetic energy having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

When the words "include" and "including" and modifications of these words are used in the present disclosure, these words intend to be comprehensive similar to the word "comprising". Furthermore, the word "or" used in the present disclosure intends not to be an exclusive OR.

When, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiment described in the present disclosure. The invention according to the present disclosure can be carried out as modified and changed aspects without departing from the gist and the scope of the invention defined based on the recitation of the claims. Accordingly, the description of the present disclosure is intended for exemplary explanation, and does not bring any restrictive meaning to the invention according to the present disclosure.

## Claims

1. A user terminal comprising:
a transmission section that transmits Channel State Information (CSI) by using at least one of a first Channel Quality Indicator (CQI) table and a second CQI table in which a code rate lower than a minimum code rate specified in the first CQI table has been specified; and
a control section that, when a CQI table is configured separately per cell, controls the transmission of the CSI by assuming that different CQI tables are not configured to a plurality of cells included in a given group or prioritizing one of first CSI based on the first CQI table and second CSI based on the second CQI table.

2. The user terminal according to claim 1, wherein, when a transmission timing of the first CSI based on the first CQI table and a transmission timing of the second CSI based on the second CQI table duplicate, the control section performs control not to transmit the first CSI.

3. The user terminal according to claim 1, wherein, when a transmission timing of the first CSI based on the first CQI table and a transmission timing of the second CSI based on the second CQI table duplicate, the control section multiplexes and transmits the first CSI and the second CSI in a range in which a code rate is a given value or less.

4. A user terminal comprising:
a reception section that receives a downlink shared channel by using at least one of a first Modulation and Coding Scheme (MCS) table and a second MCS table in which a code rate lower than a minimum code rate specified in the first MCS table has been specified;
a transmission section that transmits a transmission acknowledgement signal for the downlink shared channel; and
a control section that, when an MCS table is configured separately per cell, controls the transmission of the transmission acknowledgement signal by assuming that different MCS tables are not configured to a plurality of cells included in a given group or prioritizing one of a first transmission acknowledgement signal for a downlink shared channel that uses the first MCS table, and a second transmission acknowledgement signal for a downlink shared channel that uses a second MCS table.

5. The user terminal according to claim 4, wherein, when a transmission timing of the first transmission acknowledgement signal and a transmission timing of the second transmission acknowledgement signal duplicate, the control section performs control not to transmit the first transmission acknowledgement signal.

6. The user terminal according to claim 4, wherein, when a transmission timing of the first transmission acknowledgement signal and a transmission timing of the second transmission acknowledgement signal duplicate, the control section multiplexes and transmits the first transmission acknowledgement signal and the second transmission acknowledgement signal in a range in which a code rate is a given value or less.
